# EUROPEAN PATENT APPLICATION

(11) **EP 2 900 040 A1**
(43) Date of publication of application: **29.07.2015**
(21) Application number: 13839861.5
(22) Date of filing: 20.09.2013
(51) Int. Cl.: H05B 37/02, F21S 2/00, F21V 3/02, F21V 19/00, F21V 23/00, F21V 29/00, F21Y 101/02

(54) **LIGHTING DEVICE PROVIDED WITH LED ELEMENTS**

(30) Priority: 20.09.2012 JP 2012207625
(71) Applicant: Honda, Hirokazu, Omitama-shi, Ibaraki 319-0105 (JP)
(72) Inventor: TAKATSU Akio, Narita-shi Chiba 286-0035 (JP)
(74) Representative: Strehl Schübel-Hopf & Partner
(86) International application number: PCT/JP2013/075553
(87) International publication number: WO 2014/046254

(57) **Abstract**

{Technical Problems}

To provide a simple style of lighting device using LED

{Means for Solving Problems}

A lighting device using LED, comprising an LED group 250 configured with series-connected plural number of LED 252 and a driving circuit 550 for feeding the light-emission current to the LED group, wherein
the driving circuite 550 has a parallel circuit comprised of a peak current setting capacitor 222 and a resistor 220 connected in parallel thereto, and a full-wave rectification circuit 230; wherein
the LED group 250 is connected to the output terminal of the full-wave rectification circuit, and the capacitance of the peak current setting capacitor has a value within a region in which the peak value of the pulsating current behaves to increase its value in accordance with the increase of the capacitance of the peak current setting capacitor; wherein
an interruption period that is determined in accordance with the number of the series-connections of the LED in the LED group is specified, and the pulsating current, of which peak value is determined in accordance with the capacitance of the peak current setting capacitor, is fed to the LED group.

## Description

### {Field of the Invention}

The present invention relates to a lighting device having LED elements.

### {Background of the Invention}

A lighting device that uses a light emitting diode (hereinafter referred to as LED) has a large number of LEDs. To the LEDs, a driving current is fed to cause them emit light to illuminate as a lighting device. When a forward supply voltage to each of the LEDs used in the device as the light source is increased gradually from a state of approximately zero volts, the LED begins to pass a current at the prescribed voltage of VLC (V) and light emission starts. Further increase in the supply voltage causes the current flowing through the LED to increase, and the light emission amount of the LED increases.

LEDs, unlike ordinary diodes, have a large forward voltage drop, which invite large power consumption. The power is consumed not only for light emission, but in addition a considerable portion of the power uselessly escapes as the heat loss causing rise in the temperature of LEDs.

If temperature of the LED rises due to heat generation of LED, there arises a danger of ignition of dusts, and in addition the life of the LED is adversely affected. Therefore, a heat dissipation arrangement of metallic material having an excellent thermal conductivity is provided. This arrangement dissipates heat that the LED generates and suppresses, thereby, the temperature rise of the LED. For example, Japanese Patent Application Laid-open No. TOKKAI 2012-69303 (Patent Literature 1) has disclosed a technique, wherein a metal pedestal 30 having heat dissipation effect is provided in a straight tube 10 and the heat generated from an LED module 20 is dissipated thereby to suppress the temperature rise of the LED module 20.

### {Literature on Related Art}

### {Patent Literature}

### {Patent Literature 1}

Japanese Patent Application Laid-open No. TOKKAI 2012-69303

### {Summary of the Invention}

### { Problem to be Solved by the Invention}

The straight tube lighting system described in Patent Literature 1 has a very complicated structure. This is because of the fact that the structure uses a metal pedestal having heat dissipation effect to radiate the heat that the LED module 20 generates. It is essential to provide a heat radiation structure for suppressing temperature rise of the LED module 20. Therefore, making a straight tube lighting system have a simple structure is difficult.

To suppress the temperature rise of an LED element, lessening heat generation of the LED element is a fundamental matter. There conventionally has been a device of a little temperature rise such as a security lighting but not as a lighting device. Such security lighting uses an LED element, of which amount of luminescence is very small; thus, the LED used therein flows very little current. Due to this, the temperature rise is a little. However, it is difficult to use a device of this kind as an ordinary lighting device.

An object of the present invention is to provide a lighting device using an LED element having a reduced amount of heat generation.

### {Means for Solving the Problem}

The fundamental invention to solve the problem is to supply the current to be fed to a series circuit of LEDs in a feeding pattern having alternately repeating periods of a low current period, in which the current value is low, and a lighting light-emission period, in which current for lighting is fed. Thereby, the heat generation of the series-connected LEDs is suppressed, ensuring the required luminescence that a lighting device should have.

The first invention is a lighting device having LED element, comprising:
an LED group having series-connected plural number of LED elements that emit light with feeding a light-emission current and a driving circuit for suppling the light-emission current that flows through the series-connected plural LED elements of the LED group, wherein
the driving circuit has alternating current power source terminals for receiving alternating current supply, a peak current control circuit element that controls the peak current of the light-emission current, and a full-wave rectification circuit that full-wave rectifies alternating current inputted into input terminals thereof and outputs pulsating current from output terminals thereof, wherein
the peak current control circuit element and input terminals of the full-wave rectification circuit are provided between the alternating current power source terminals,
the LED group is connected between the output terminals of the full-wave rectification circuit, and the peak value of the light-emission current flowing through the LED group is determined in accordance with the peak current control circuit element, wherein
the light-emission current fed to the LED group has feeding periods of a low current period that is determined in accordance with the number of the series-connections of LED elements of the LED group and a lighting light-emission period the peak value in which is determined in accordance with the peak current control circuit element, wherein
the light-emission current is a pulsating current that flows repeating feeding periods of the low current period and the lighting light-emission period.

The second invention is the lighting device having LED elements according to the first invention, wherein the peak current control circuit element is a peak current control capacitor, and the capacitance of a peak current setting capacitor is in a range from 0.5 µF or more to 20 µF or less.

The third invention is the lighting device having LED elements according to the second invention, wherein a resistor is connected in parallel with the peak current control capacitor, the resistance of the resistor is 3 kΩ or larger.

The fourth invention is the lighting device having LED elements according to the first invention, wherein the peak current control circuit element is a peak current control resistor and the resistance of the peak current control resistor is in a range from 200 Ω to 700 Ω.

The fifth invention is the lighting device having LED elements according to the first invention, further comprising a straight tube LED lamp having a resin board therein and a first fixture and a second fixture respectively installed on both ends of the straight tube LED lamp for supporting the lamp, wherein
the LED group and the driving circuit are mounted on the resin board, and each of the first and the second fixtures has a lamp mount for fixing the end of the straight tube LED lamp, a fixing base for attaching the straight tube LED lamp thereon, and a supporting column that joins the lamp mount integrally to the fixing base.

The sixth invention is the lighting device using LED according to the first invention, further comprising a case that accommodates therein a resin board, wherein the driving circuit is provided on the resin board and the LED elements of the LED group are arranged outer periphery of the driving circuit.

The seventh invention is the lighting device using LED according to the first invention, wherein the low current period is a current interruption period where the current flowing through the LED group fed from the driving circuit is zero.

The eighth invention is the lighting device using LED according to the seventh invention, further comprising a bias current feeding circuit, wherein the bias current feeding circuit feeds a bias current at least during the current interruption period.

### {Advantageous Effect of the Invention}

The present invention is capable of obtaining a lighting device that uses LED elements, wherein the amount of heat that the LED elements may generate is a little.

### {Brief Description of Drawings}

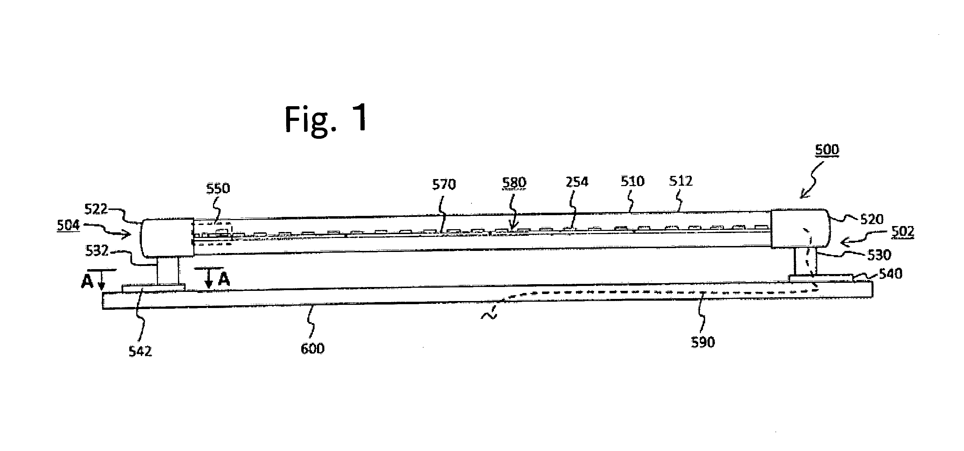

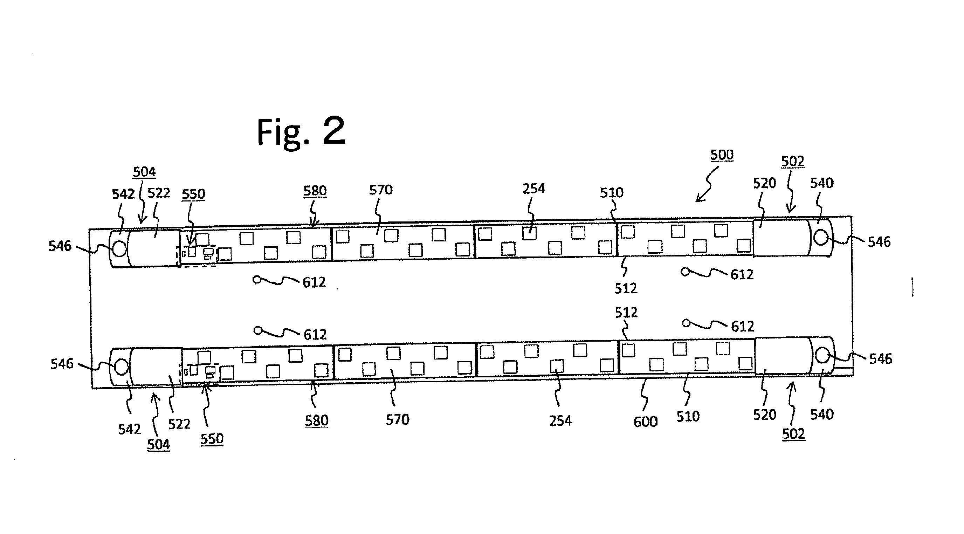

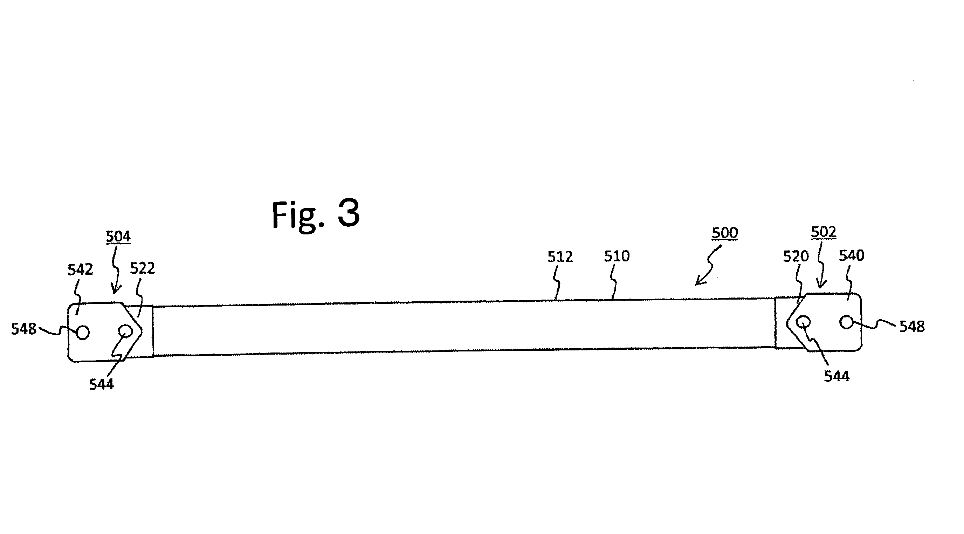

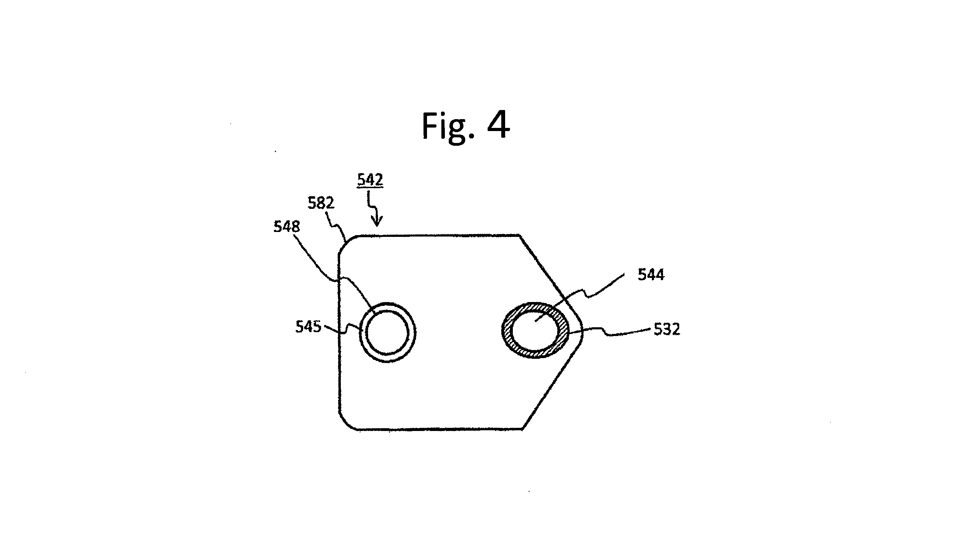

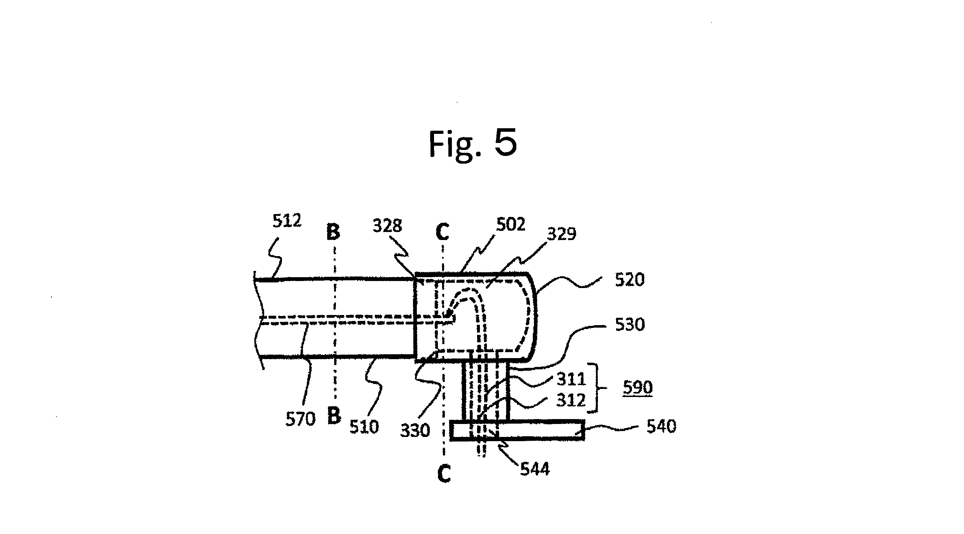

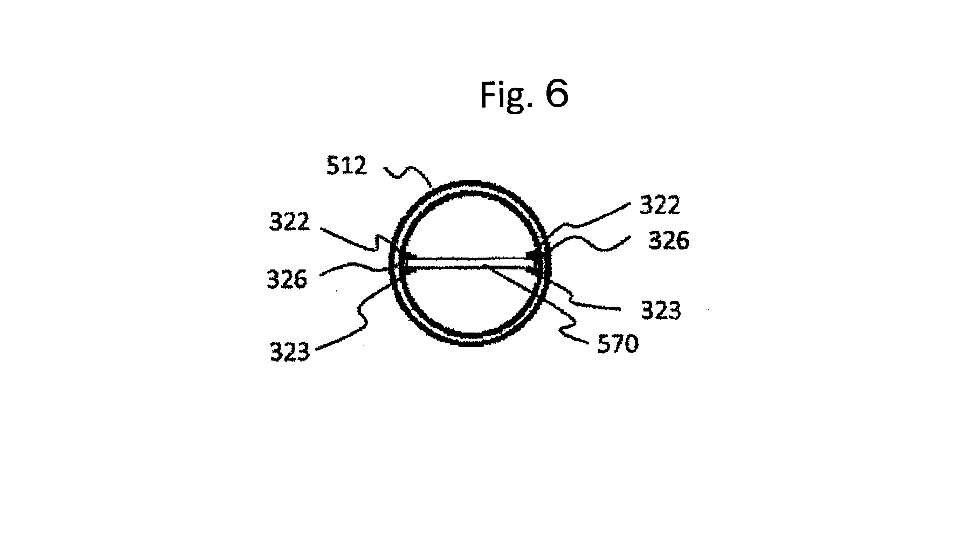

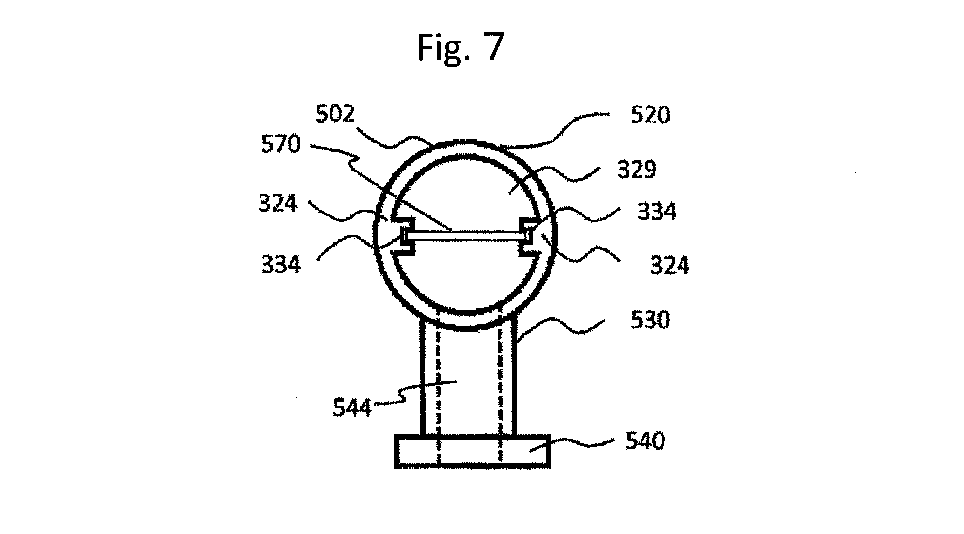

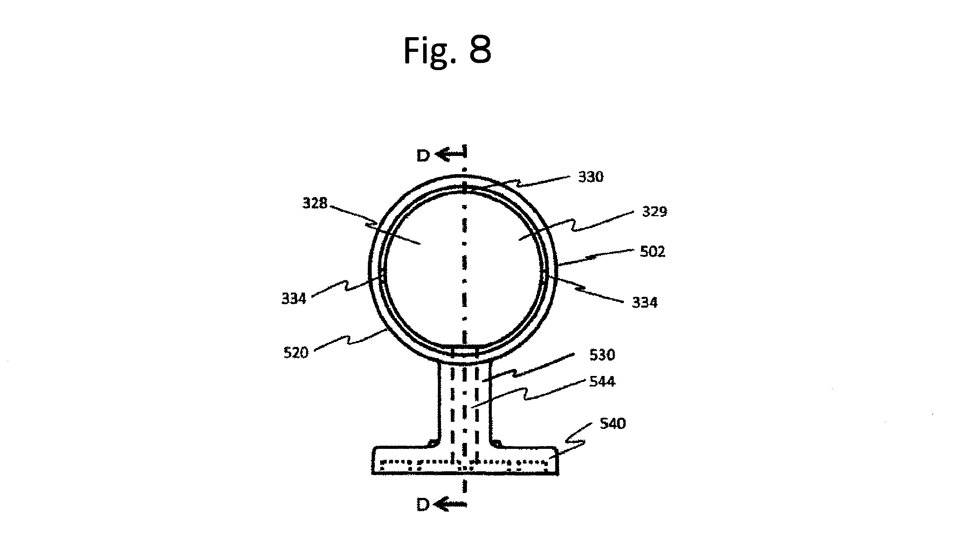

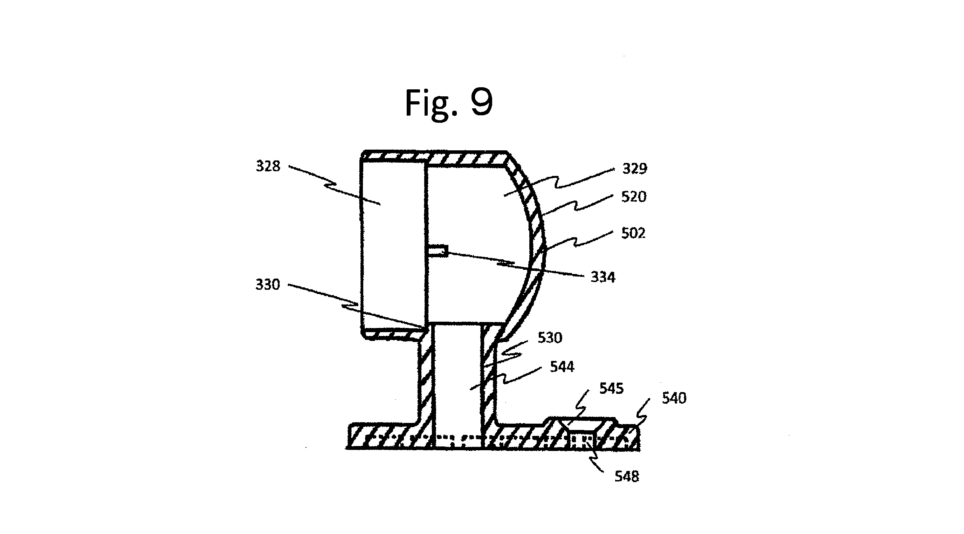

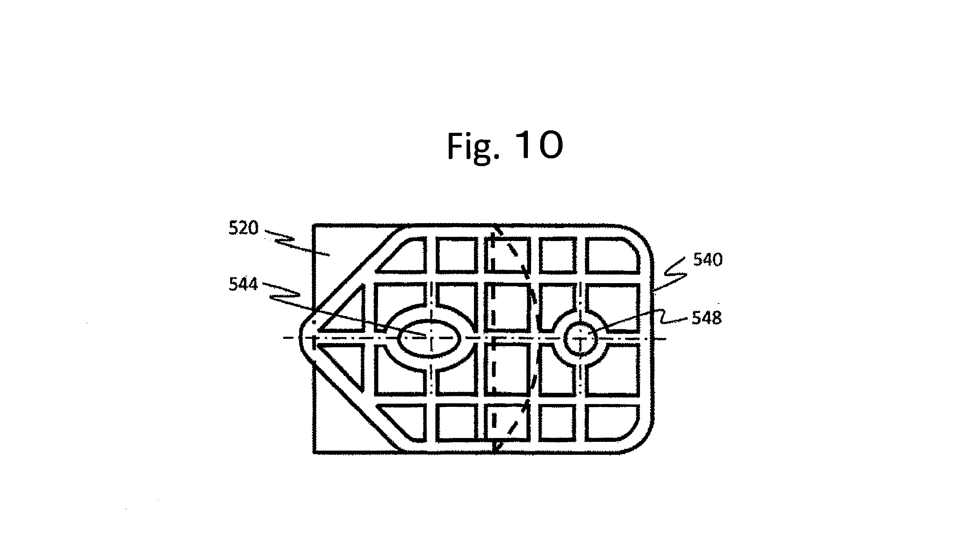

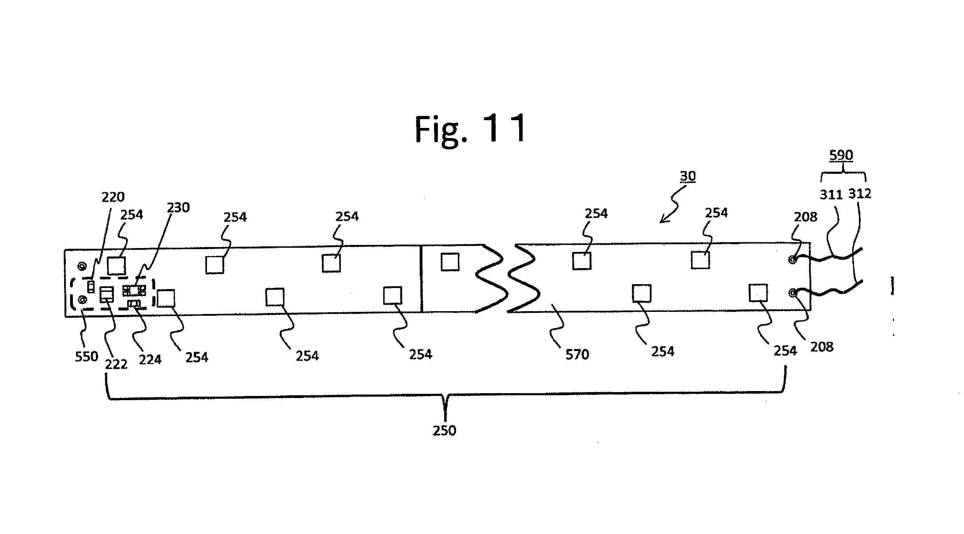

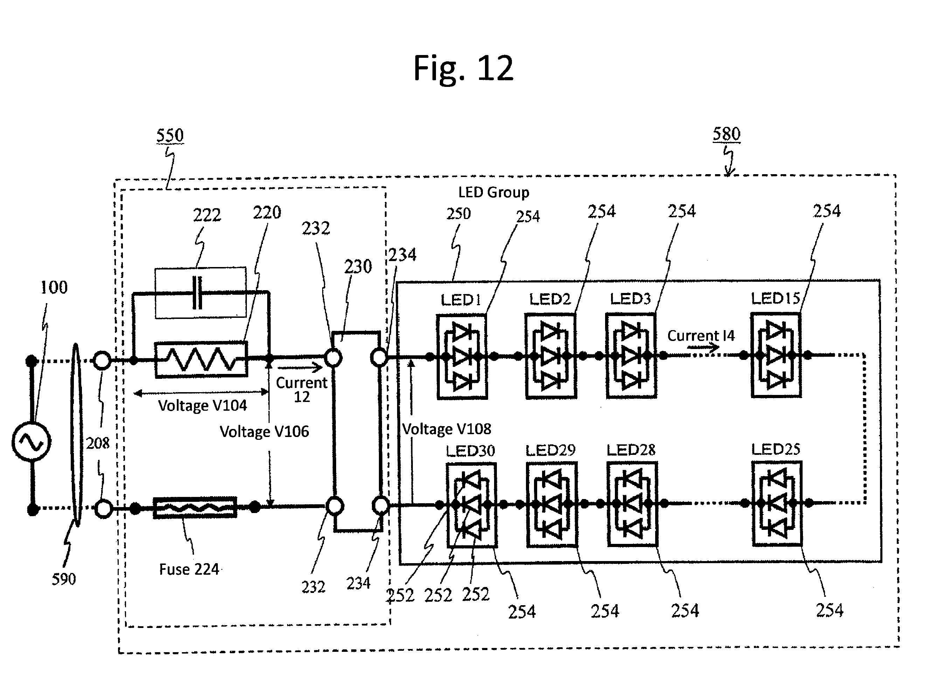

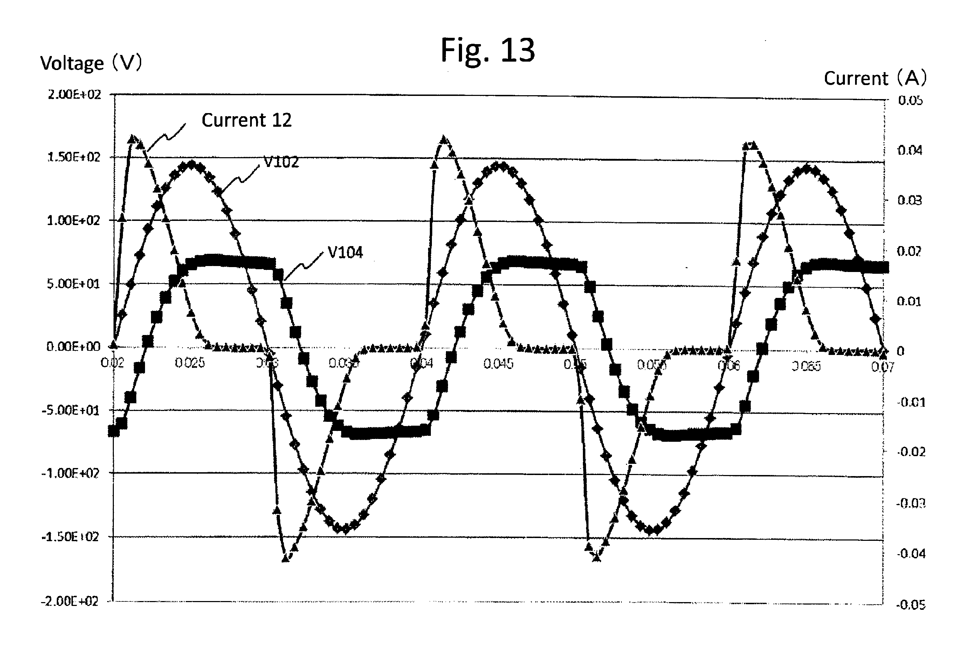

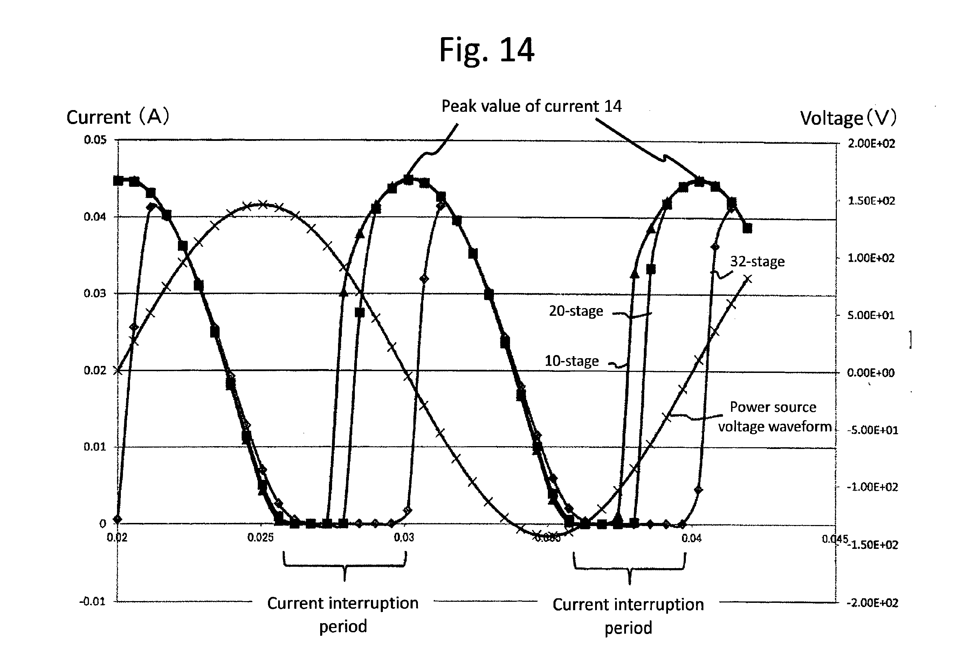

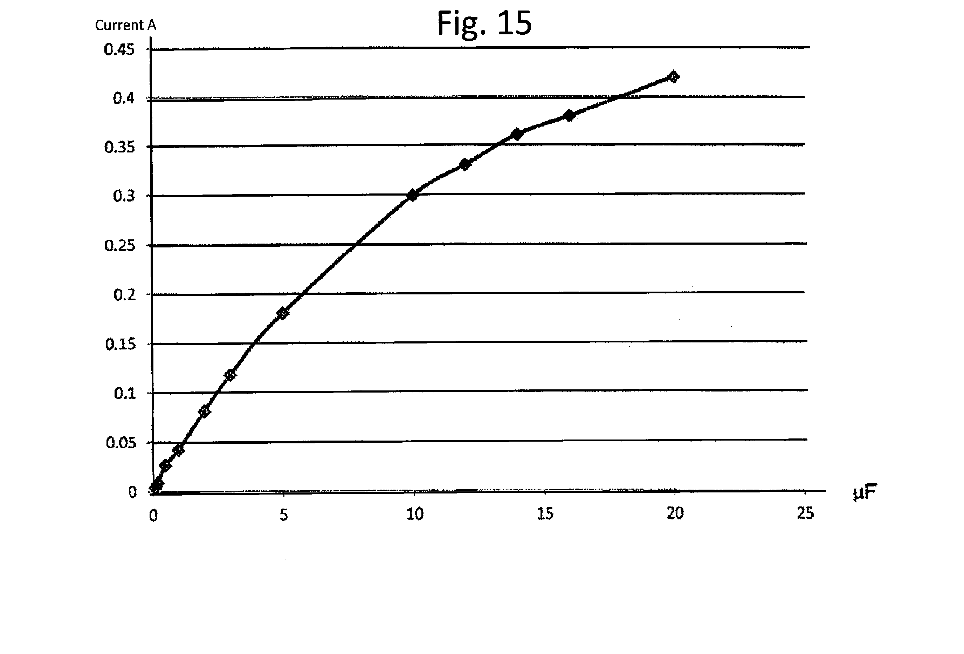

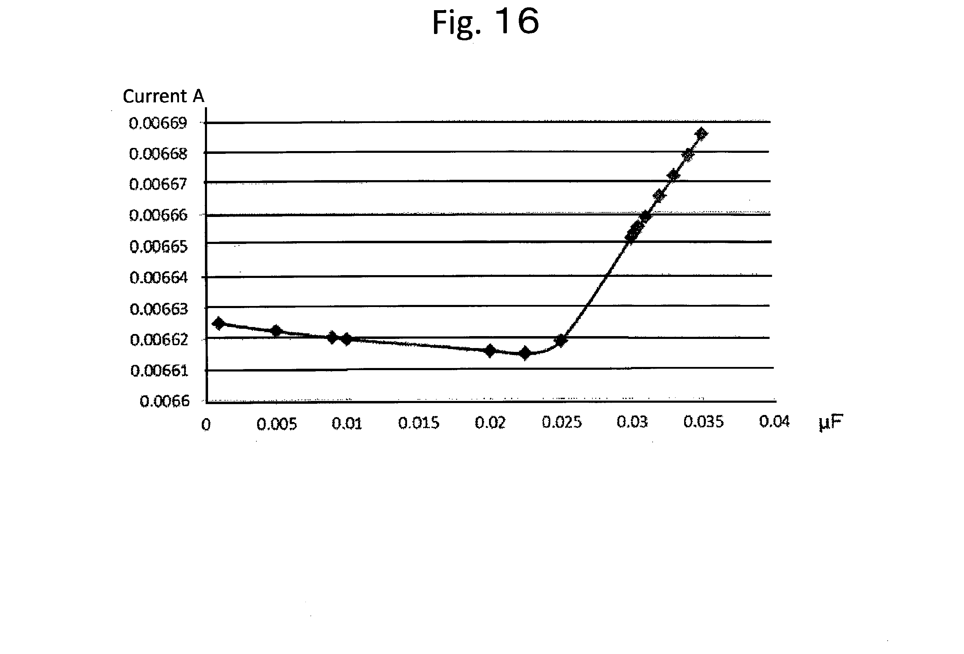

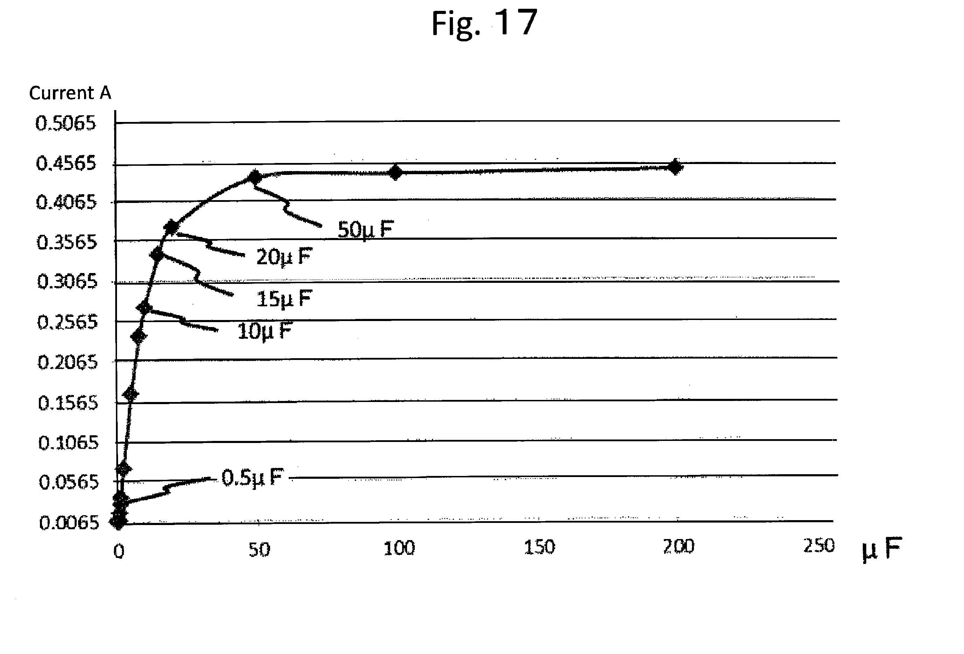

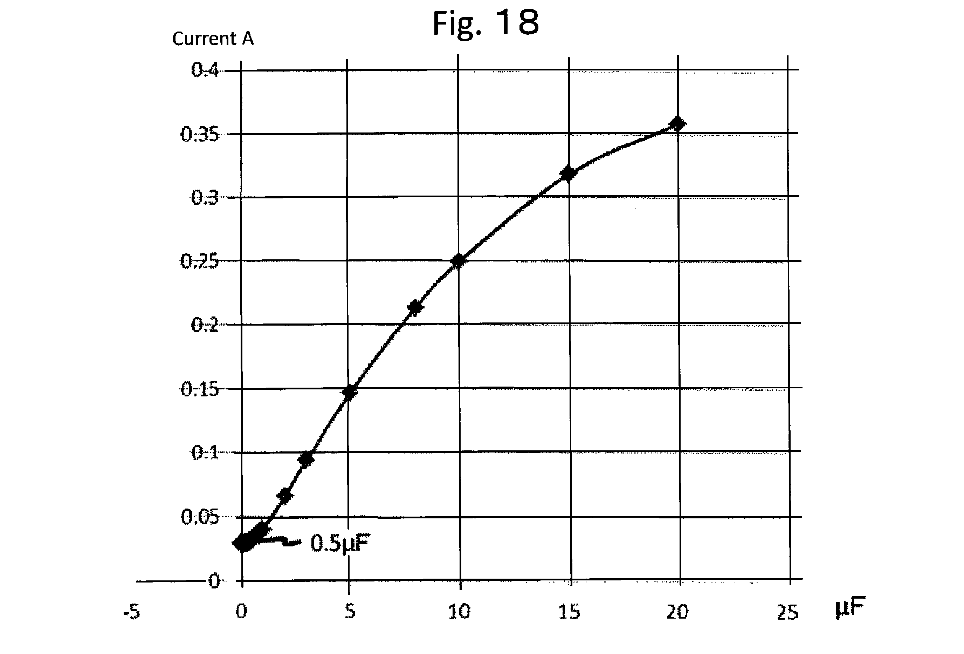

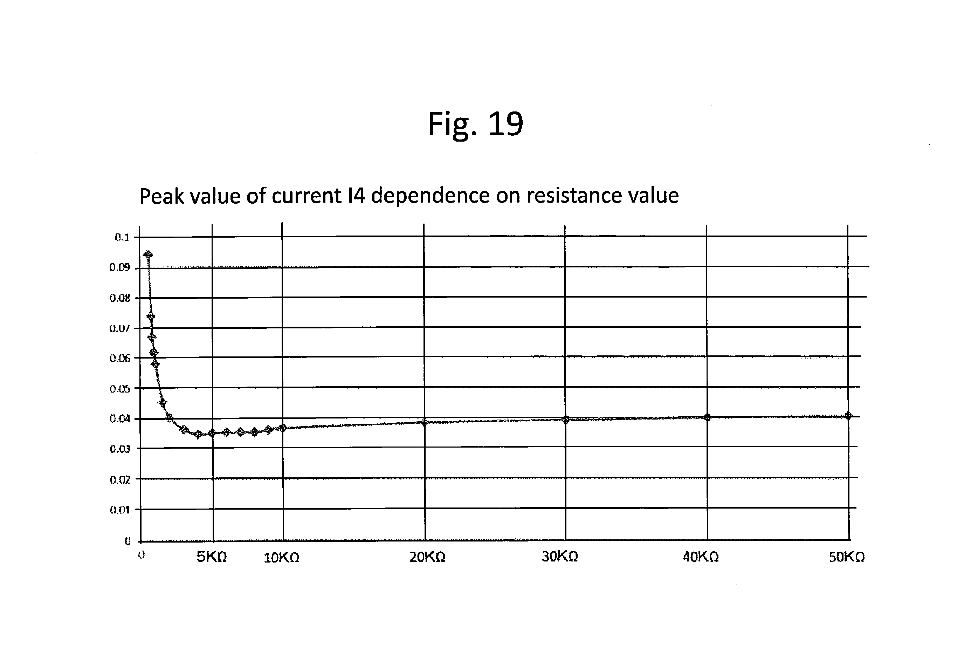

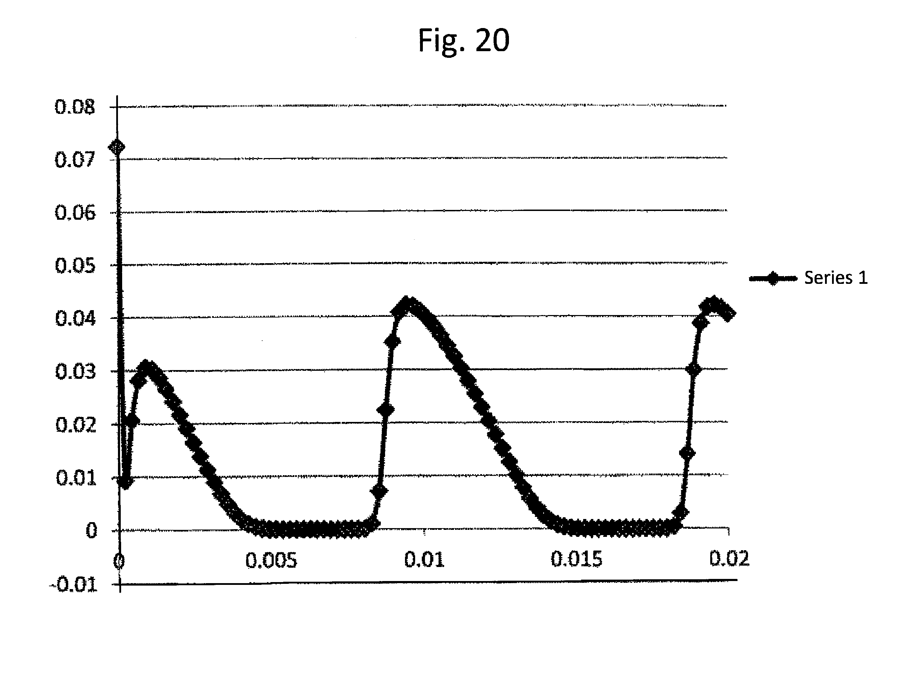

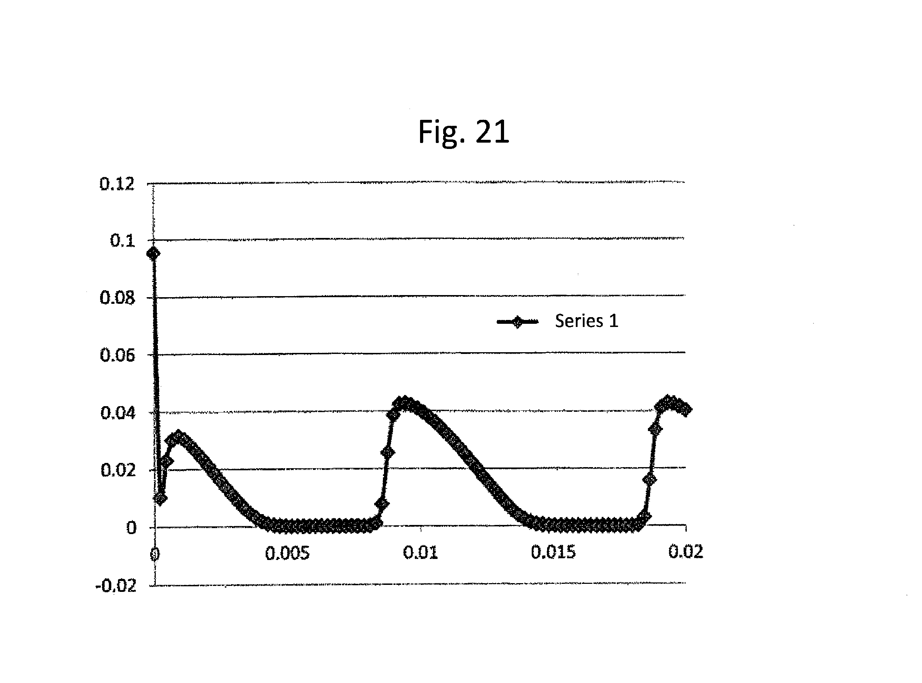

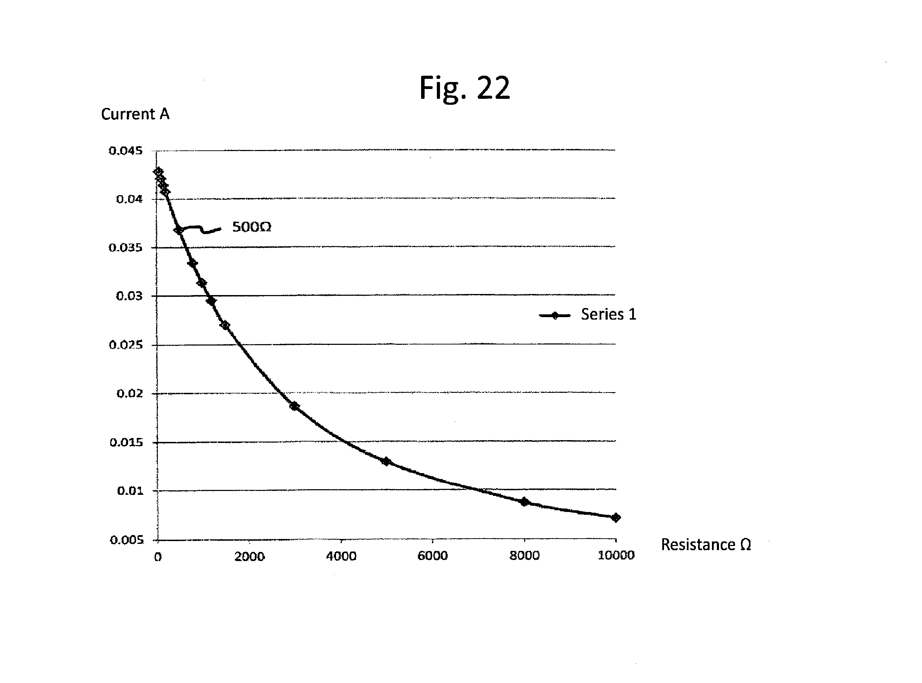

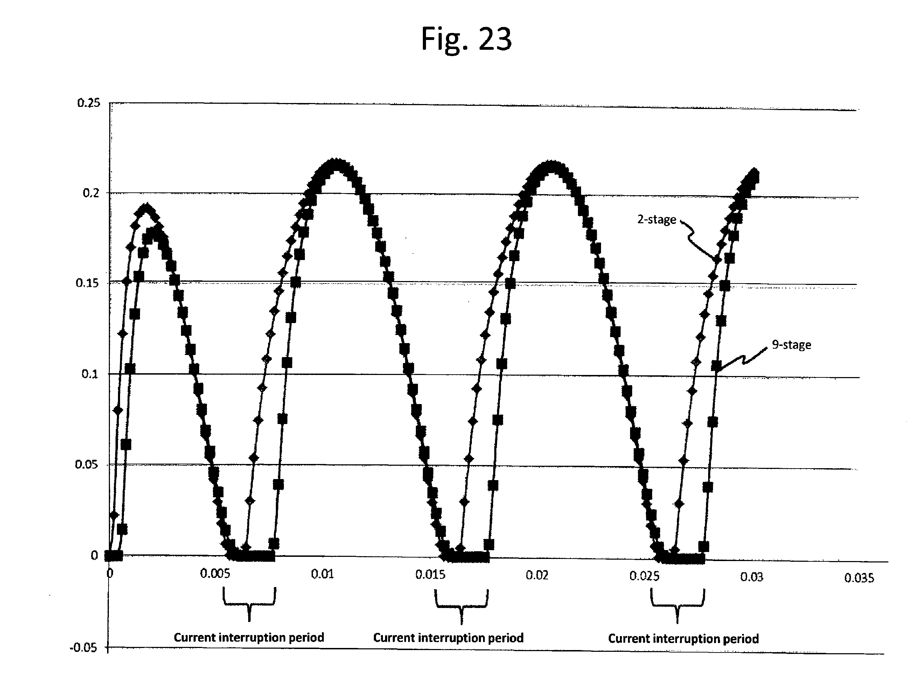

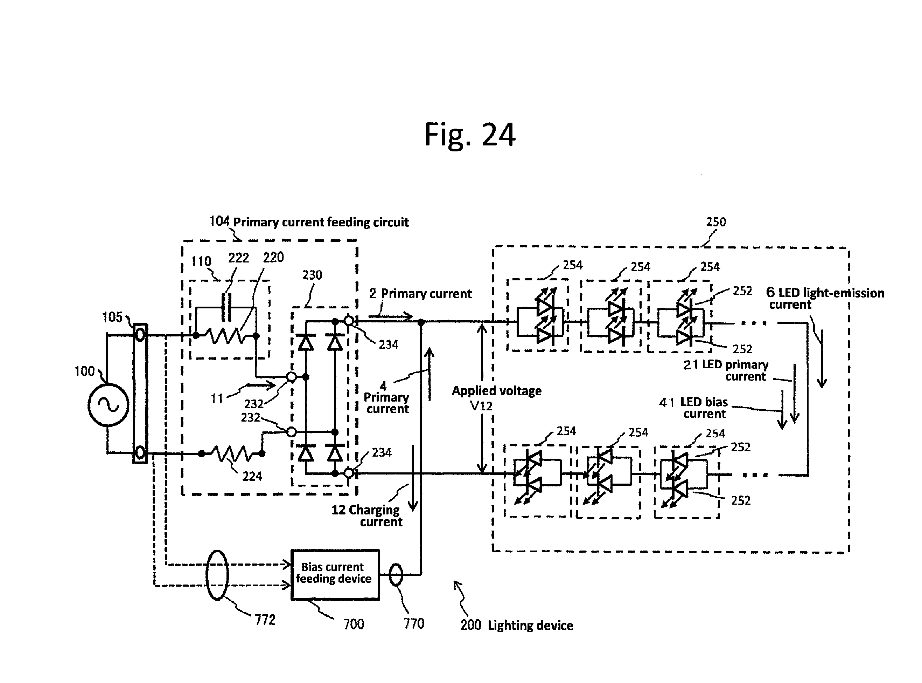

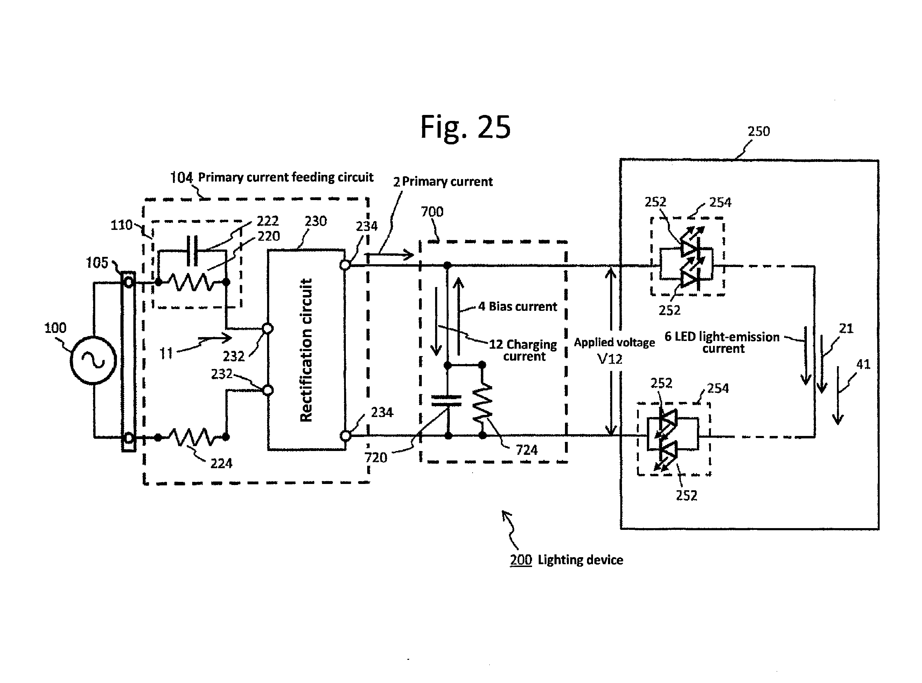

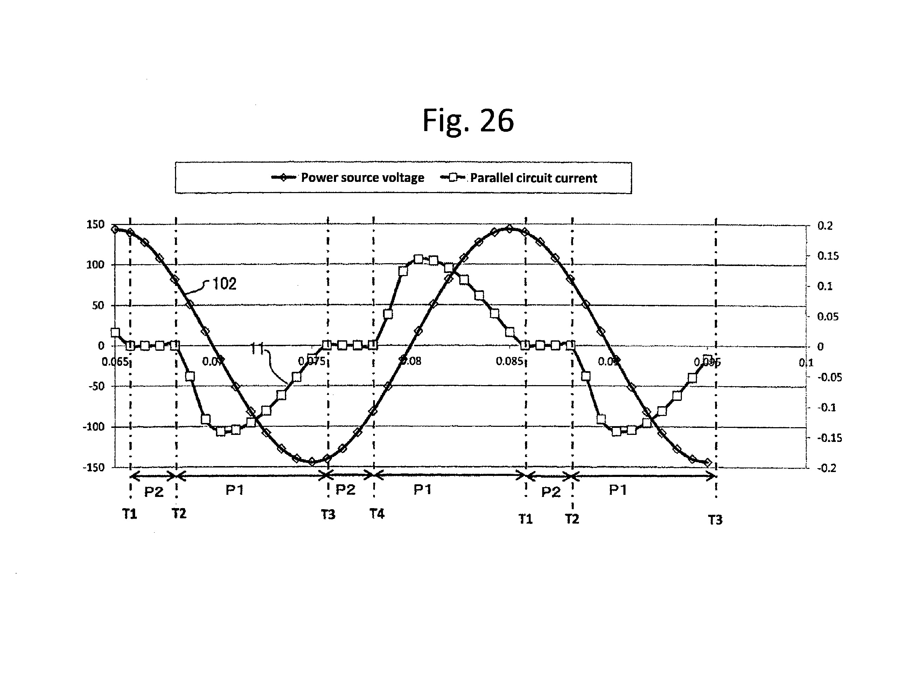

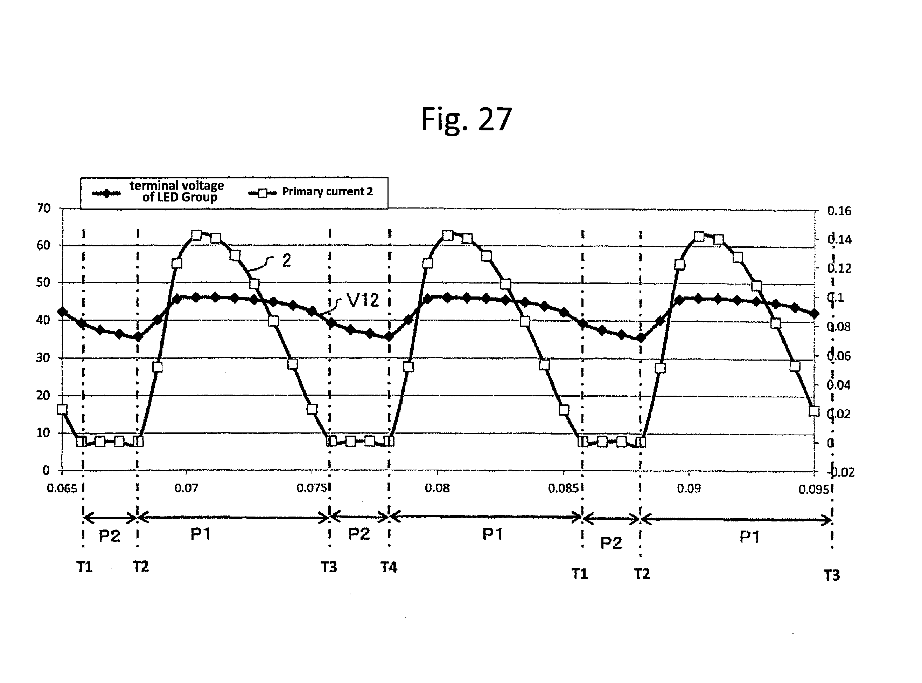

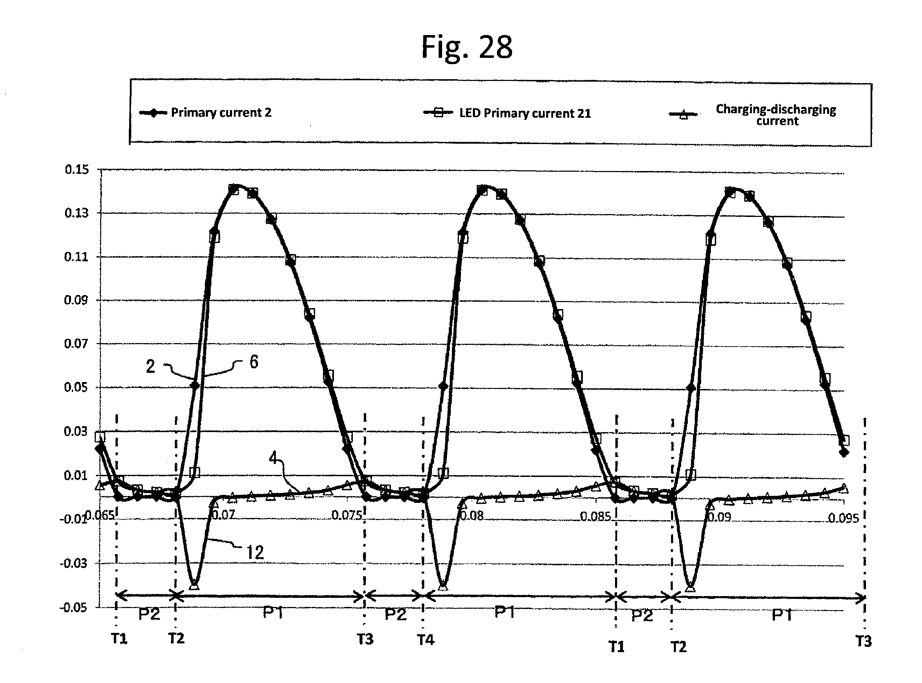

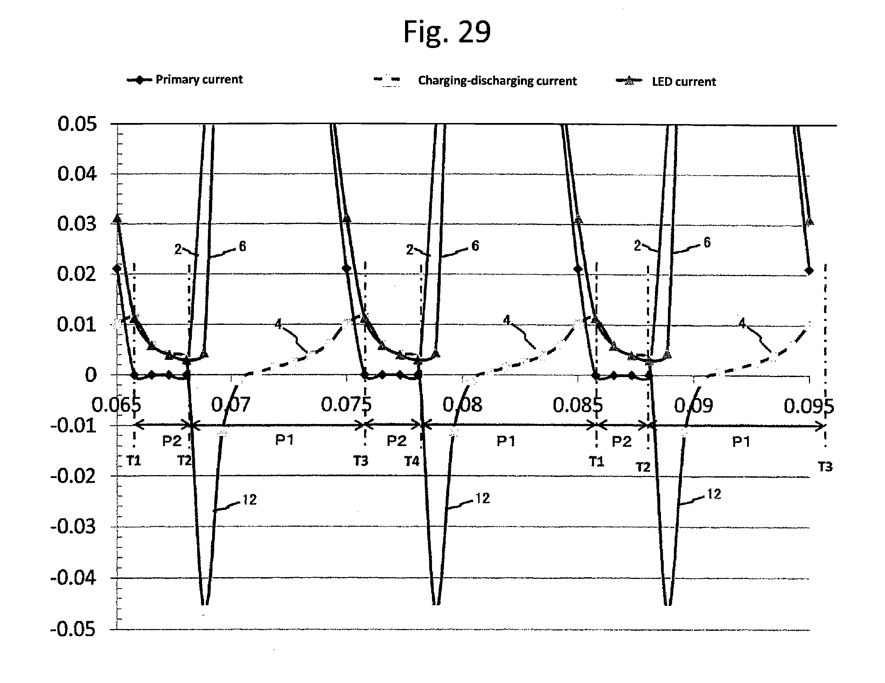

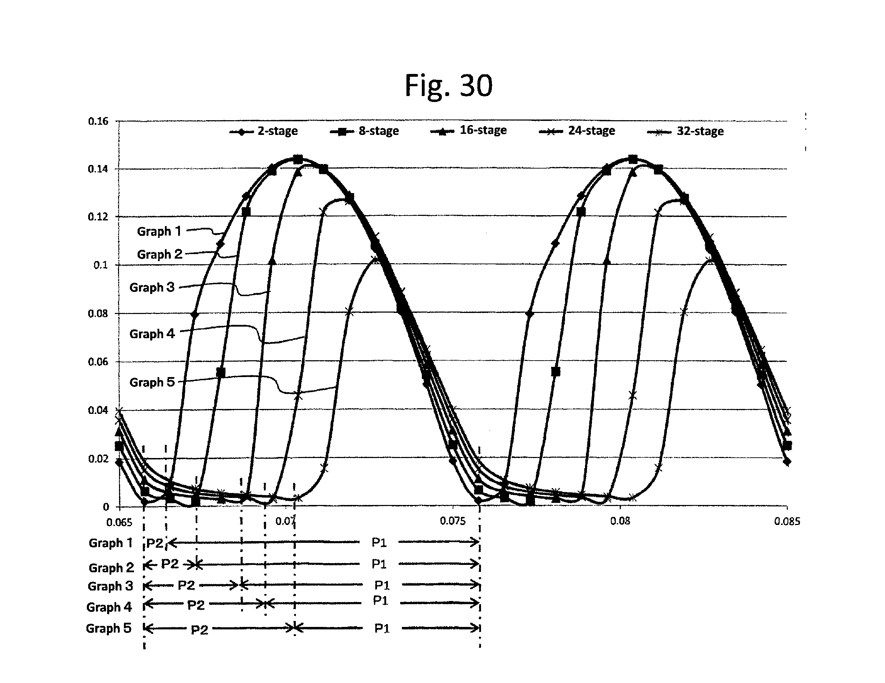

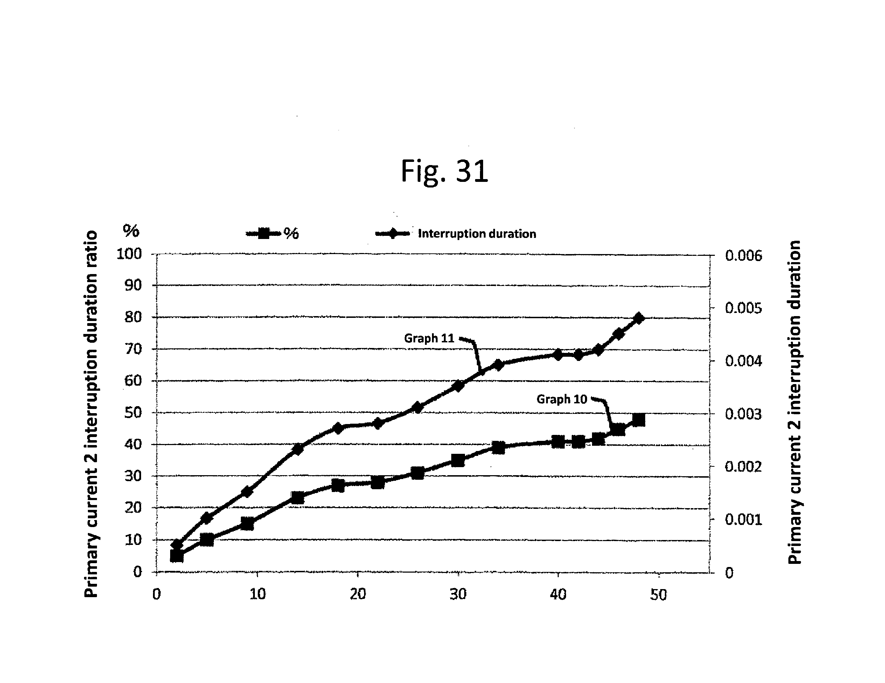

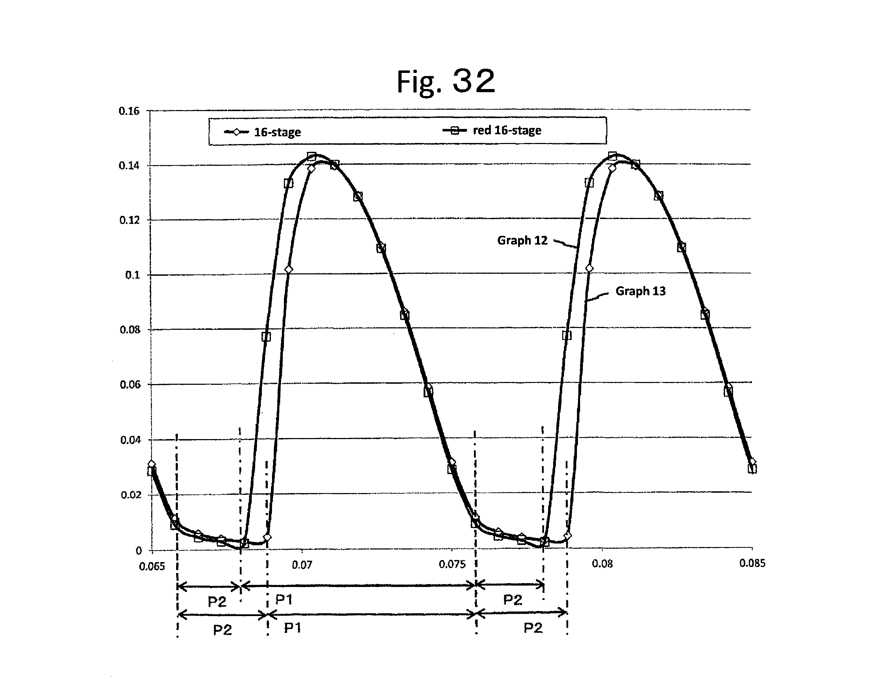

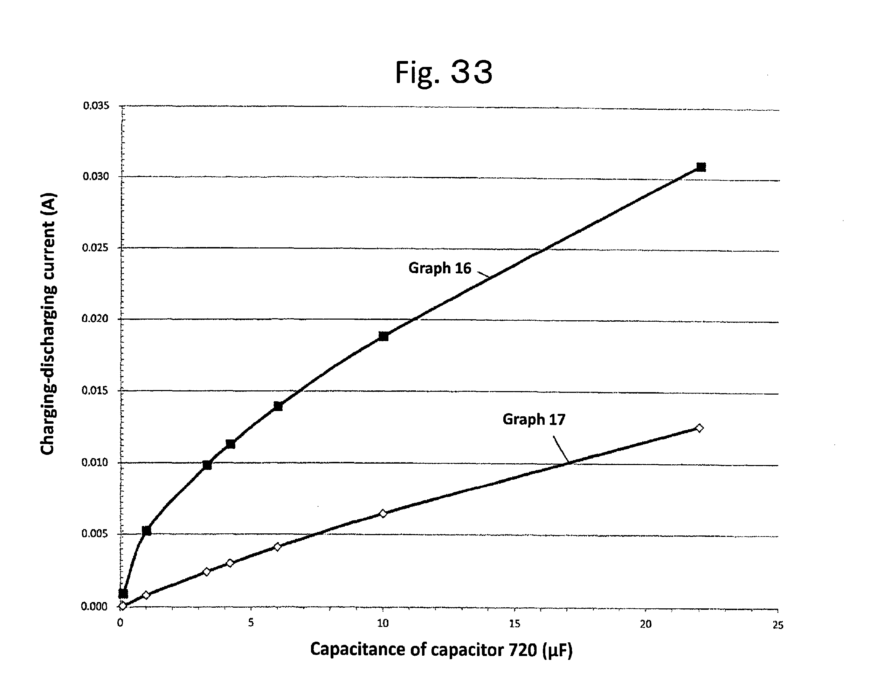

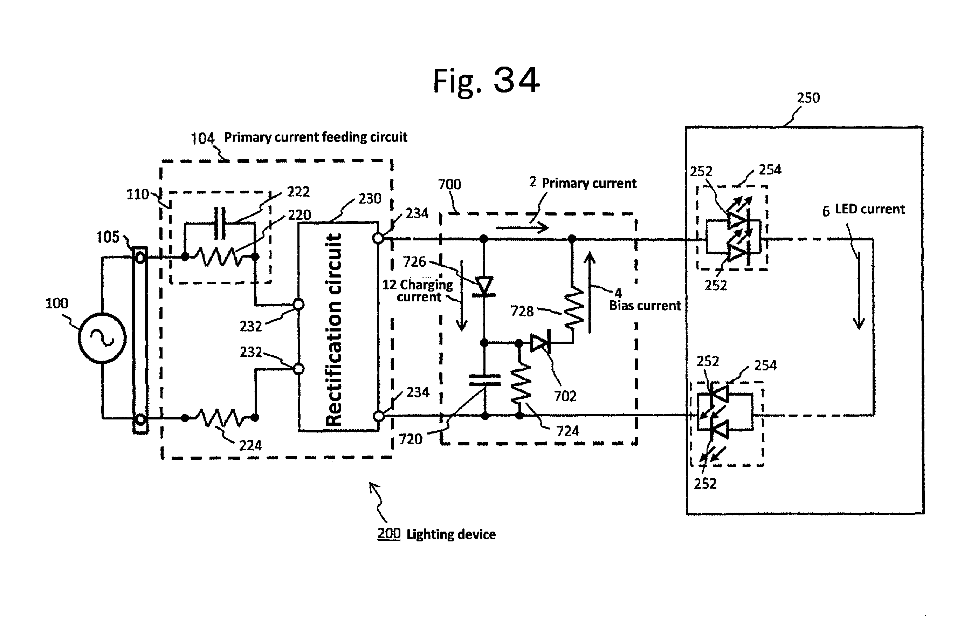

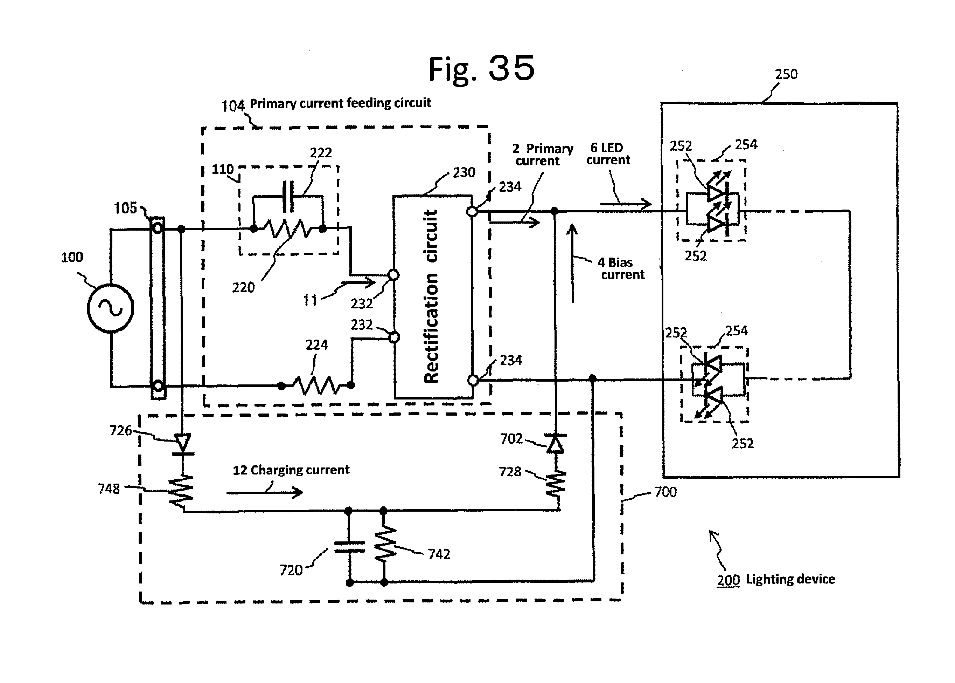

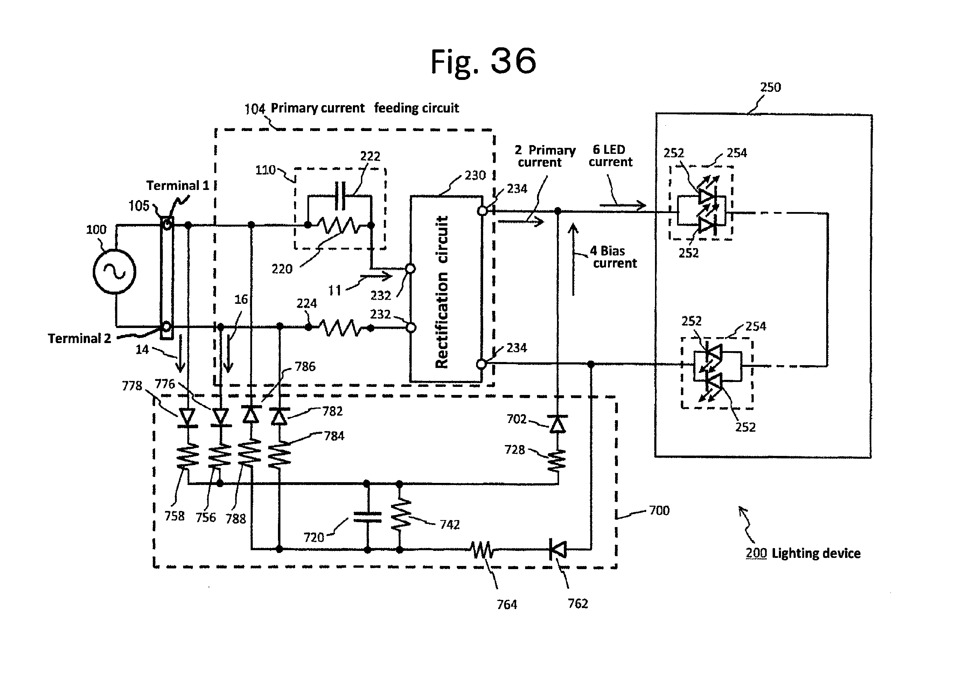

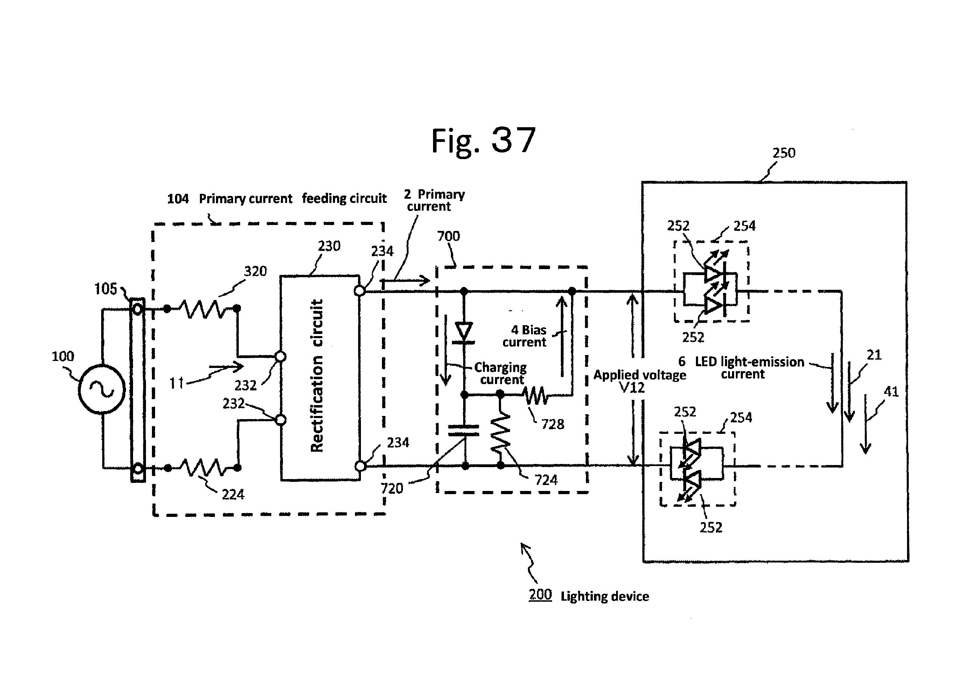

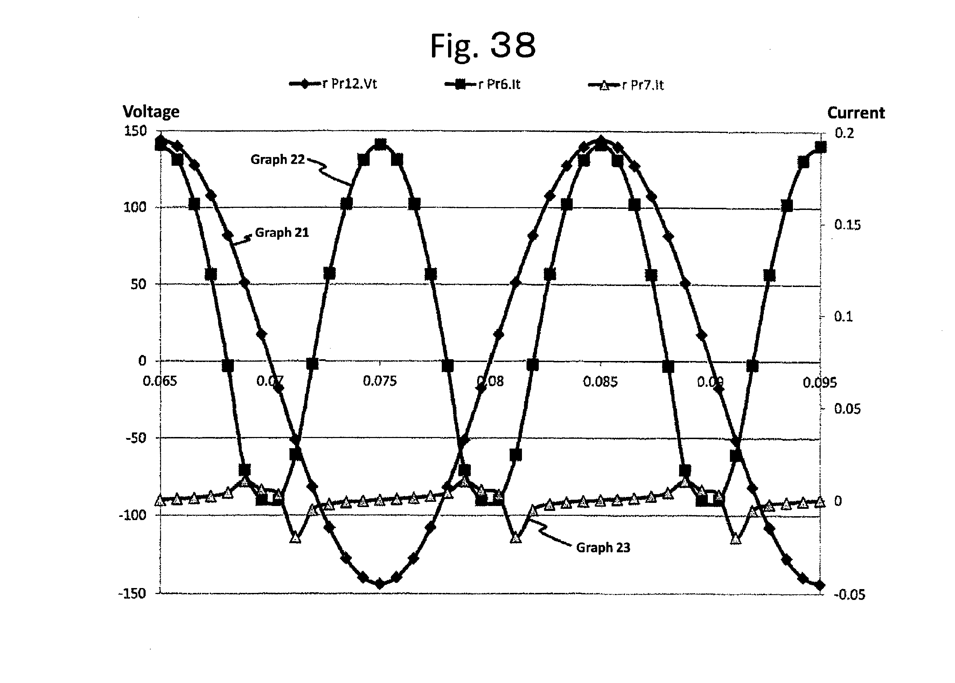

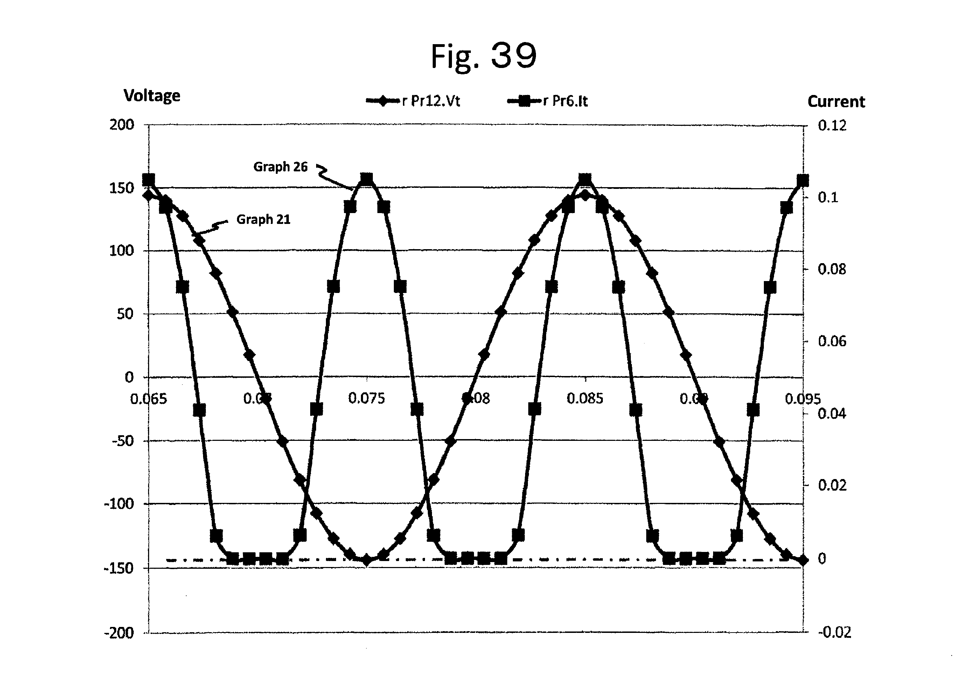

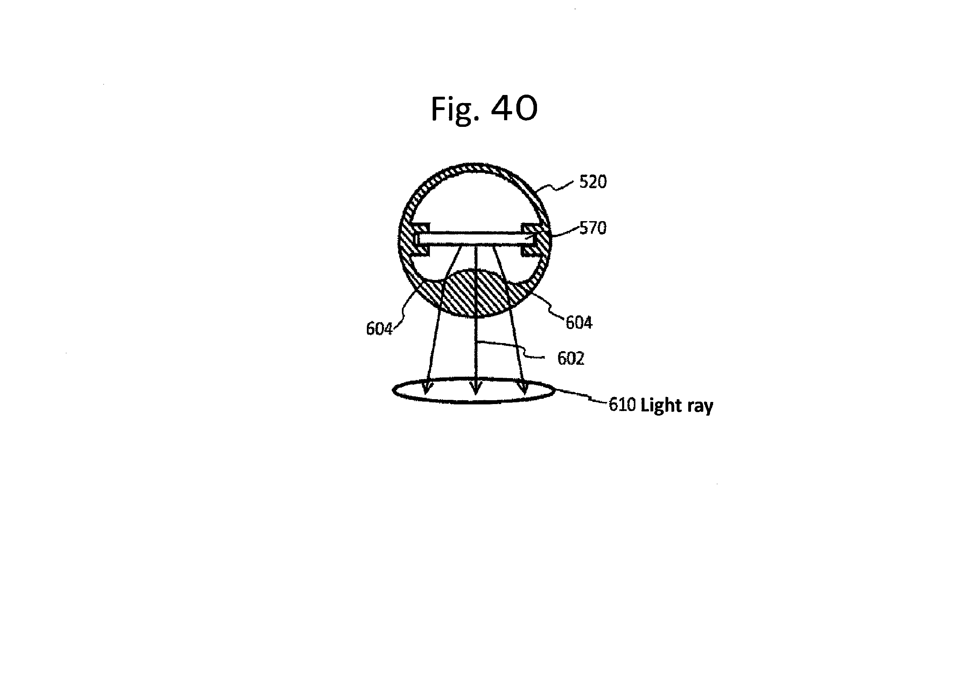

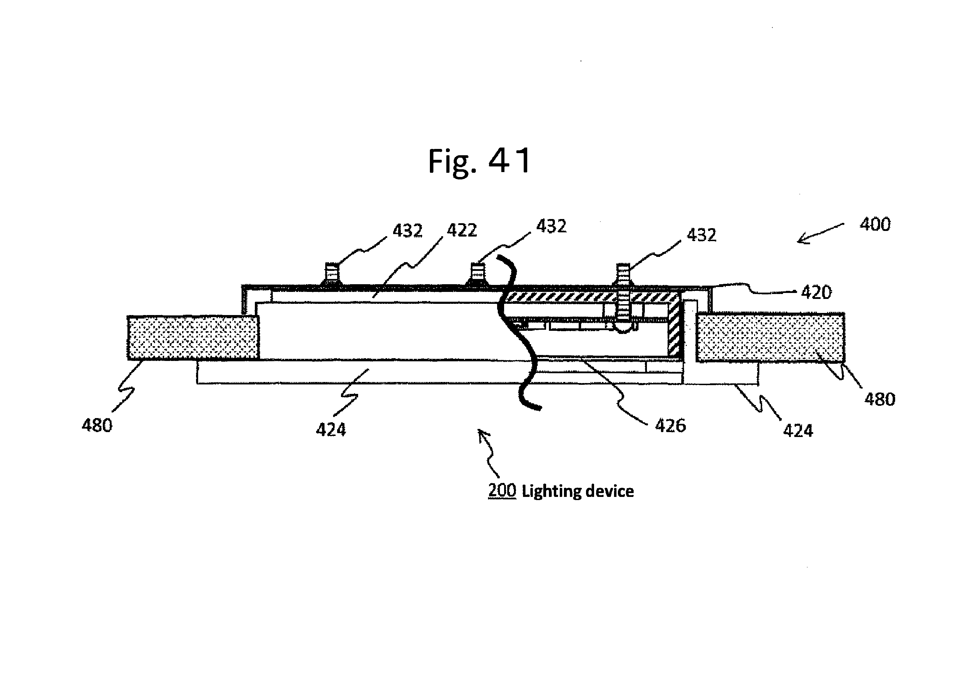

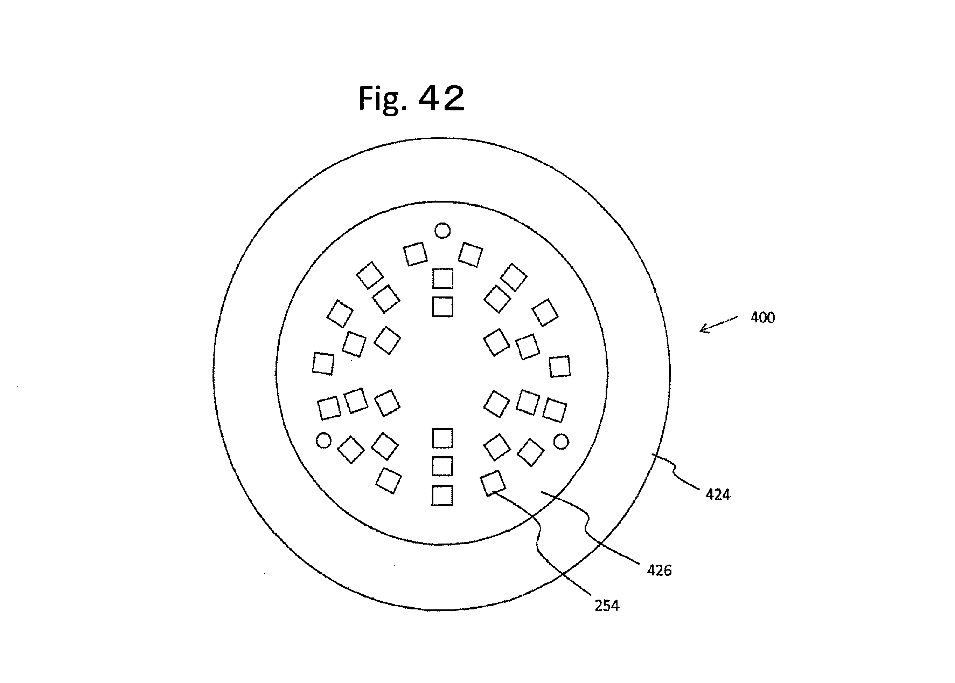

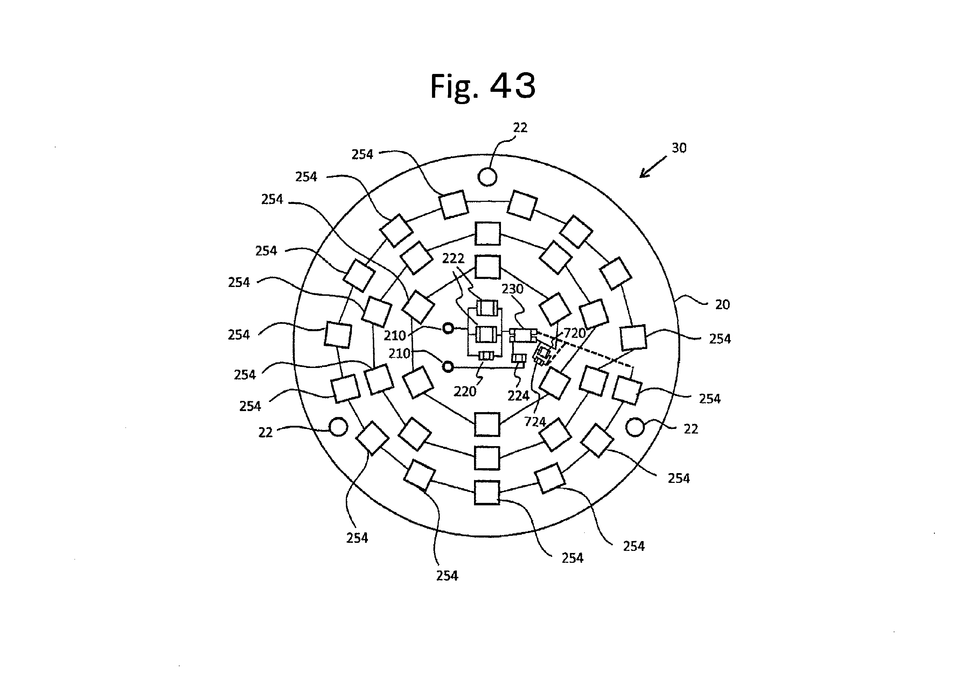

{Fig. 1} This drawing is a front view of a straight tube lighting device 500 which is an embodiment of a lighting device using LED.
{Fig. 2} This drawing is a plan view of the straight tube lighting device 500 which is an embodiment of a lighting device using LED.
{Fig. 3} This drawing is a bottom view of the straight tube lighting device 500 which is an embodiment of a lighting device using LED.
{Fig. 4} This drawing is a cross sectional view taken along the line A-A of the straight tube lighting device 500 illustrated in Fig. 1.
{Fig. 5} This drawing is an explanatory illustration that illustrates a connection structure between a cylindrical case 512 and a fixture 502.
{Fig. 6} This drawing is a cross sectional view taken along the line B-B of the connection structure illustrated in Fig. 5.
{Fig. 7} This drawing is a cross sectional view taken along the line C-C of the connection structure illustrated in Fig. 5.
{Fig. 8} This illustrates another embodiment of the fixture 502.
{Fig. 9} This is a cross sectional view taken along the line D-D of another embodiment illustrated in Fig. 8.
{Fig. 10} This is a bottom view of the fixture 502 of another embodiment illustrated in Fig. 8.
{Fig. 11} This is an explanatory illustration that illustrates the arrangement of an electrical parts 30 held on a resin board 570.
{Fig. 12} This is a circuit diagram to illustrate an electrical circuitry of the lighting device using LED.
{Fig. 13} This is a waveform chart that describes workings of the electrical circuitry given in Fig. 12.
{Fig. 14} This is a waveform chart of a current I4 that flows through an LED group 250.
{Fig. 15} This is a graph that describes change of the peak value of the current I4 with respect to capacitance variation of a peak current setting capacitor in the circuitry given in Fig. 12.
{Fig. 16} This is a graph that describes change of the peak value of the current I4 with respect to capacitance variation of the peak current setting capacitor in the circuitry given in Fig. 12.
{Fig. 17} This is a graph that describes change of the peak value of the current I4 with respect to capacitance variation of the peak current setting capacitor in the circuitry given in Fig. 12.
{Fig. 18} This is a graph that describes change of the peak value of the current I4 with respect to capacitance variation of the peak current setting capacitor in the circuitry given in Fig. 12.
{Fig. 19} This is a graph that describes change of the peak value of the current I4 with respect to resistance variation of a resistor 220 in the circuitry given in Fig. 12.
{Fig. 20} This is a graph that describes the behavior of transient current at the time of power on under the condition that the resistance of a fuse 224 in the circuitry given in Fig. 12 is 100 Ω.
{Fig. 21} This is a graph that describes the behavior of transient current at the time of power on under the condition that the resistance of the fuse 224 in the circuitry given in Fig. 12 is 50 Ω.
{Fig. 22} This is a graph that describes change of the peak value of the current I4 with respect to resistance variation of the fuse 224 in the circuitry given in Fig. 12.
{Fig. 23} This is a chart that describes a waveform of the current I4 where the number of stages in the LED group 250 in Fig. 12 is two and nine.
{Fig. 24} This is a circuit diagram that illustrates the electrical circuit of the lighting device using LED in an embodiment of the present invention.
{Fig. 25} This is a circuit diagram that illustrates a circuit of the embodiment 1, in which an example of a bias current feeding circuit of the electrical circuitry given in Fig. 24 is shown.
{Fig. 26} This is a waveform chart of a current that describes workings of the electrical circuitry given in Fig. 25.
{Fig. 27} This is a waveform chart of a primary current and other related feature that describes workings of the electrical circuitry given in Fig. 25.
{Fig. 28} This is a waveform chart of an LED light-emission current and other related feature of the electrical circuitry given in Fig. 25.
{Fig. 29} This is a partially enlarged illustration of the waveform chart given in Fig. 28.
{Fig. 30} This is an explanatory chart that describes change of the LED light-emission current waveform with respect to variation of the number of stages of the LED element in the electrical circuitry given in Fig. 25.
{Fig. 31} This is a graph that describes the interruption state of the primary current with respect to variation of number of stages of the LED element in the electrical circuitry given in Fig. 25.
{Fig. 32} This is a waveform chart that describes the change of the primary current waveform with respect to variation of characteristics of the LED element in the electrical circuitry given in Fig. 25.
{Fig. 33} This is an explanatory graph that describes change of current value of the bias current with respect to variation of the capacitance of a bias capacitor in the electrical circuitry given in Fig. 25.
{Fig. 34} This is an electrical circuit diagram of the embodiment 2, in which another embodiment of the bias current feeding circuit of the electrical circuitry given in Fig. 25 is shown.
{Fig. 35} This is an electrical circuit diagram of the embodiment 3, in which further another embodiment of the bias current feeding circuit of the electrical circuitry given in Fig. 25 is shown.
{Fig. 36} This is an electrical circuit diagram of the embodiment 4, in which still further another embodiment of the bias current feeding circuit of the electrical circuitry given in Fig. 25 is shown.
{Fig. 37} This is an electrical circuit diagram of the embodiment 5, in which another embodiment of the primary current feeding circuit of the electrical circuitry given in Fig. 24 is shown.
{Fig. 38} This is an explanatory waveform chart that explains waveforms of the LED light-emission current and other related feature in the embodiment 5 given in Fig. 37.
{Fig. 39} This is an explanatory waveform chart that explains the waveform of the primary current in the embodiment 5 given in Fig. 37.
{Fig. 40} This drawing is an illustration that explains another embodiment of the embodiment given in Fig. 6.
{Fig. 41} This drawing is a partial cross sectional view of a side view of a downlight in which the electrical circuit explained in the embodiments 1 to 5 is used.
{Fig. 42} This drawing is a bottom view of the downlight given in Fig. 41.
{Fig. 43} This drawing is an explanatory drawing that illustrates a circuit board of the downlight given in Fig. 41.

### {Mode of Implementation of the Invention}

Modes of implementation of the invention (hereinafter referred to as an embodiment) are capable of solving the above-mentioned problem described under the heading of Problem to be Solved by the Invention, and obtains the effect described under the heading of Advantageous Effect of the Invention. Embodiments, which will be described hereunder, are however not limited to the described examples. The invention is capable also of solving other problems not described under the above-stated heading of Problem to be Solved by the Invention, and obtains also other effect not described under the above-mentioned heading of Advantageous Effect of the Invention. Further, the present invention is applicable naturally to the straight tube lighting device using a straight tube LED lamp described under the heading of Title of the Invention. Accordingly, the art explained in the following embodiments is applicable to lighting devices such as a circular downlight other than the straight tube lighting device.

Typical problems that the following embodiments solve, the configuration for solving the problem, and the effects are explained hereunder, wherein following embodiments will provide further details of these features. To help understanding each configuration, the following description uses the reference numerals appearing in drawings. It should be noted that the typical problems might be a duplicate of the above-mentioned problem to be solved by the invention or, as the case may be, might be another problem. Also it should be noted that the typical effects might be a duplicate of the above-mentioned effect described under the above-mentioned heading of Advantageous Effect of the Invention or, as the case may be, might be another effect.

### 1. Simplified structure by integration of straight tube LED lamp and fixture

### (2) Integration of a straight tube LED lamp 510 and fixtures 502 and 504

A conventional straight tube LED lamp uses a manner, in which purchasing a straight tube LED lamp, replacing the straight tube LED lamp alone, and then putting in use, likewise in a fluorescent lamp. A background of use of this manner is that the service life of a straight tube LED lamp is short as is in a fluorescent lamp; and because of this, it is necessary to replace the straight tube LED lamp repeatedly.

In the embodiment described below, the fixture 502 and the fixture 504 are attached to the straight tube LED lamp 510 in a structure that does not allow a non-specialized person to detach easily. Background of use of such structure may include that the straight tube LED lamp 510 having the LED group 250 and a driving circuit 550 for feeding current to the LED group 250 therein permits a long-time use without failure or deterioration.

In spite of its very simple circuitry, the LED group 250 and the driving circuit 550 for feeding current to the LED group 250 causes the LED group 250 to generate very little heat; the LED group 250 and the driving circuit 550 will be explained in the following embodiments. Further, the heat generation of the driving circuit 550 is also very little. In addition, the amount of light-emission of the LED group 250 can be maintained at a proper level even without use of a semiconductor switching element for forced interruption of current. The reason for this is that the peak value of the current flowing through the LED group 250 is controlled by setting the capacitance of a peak current setting capacitor 222 connected in series to the alternating current power source. Thereby, the heat generation inside the straight tube LED lamp 510 is considerably reduced. As a consequence of this, the service life of the straight tube LED lamp 510 is significantly prolonged. Because the straight tube LED lamp 510 and the fixtures 502 and 504 are manufactured as a one-body product on a condition that they will not be detached, a straight tube lighting device 500, which will be explained in the following embodiment, can be usable for a long time without need for the replacement of the straight tube LED lamp 510 by installing the invented lighting device at a a lighting-required place.

### (2) Reduction of heat generation by use of a peak current setting capacitor 222

In the embodiment explained hereunder, a ceramic capacitor, which has a long life, can be used as the peak current setting capacitor 222. Unlike the conventional art, use of a smoothing capacitor is not required and use of an electrolytic capacitor, giving a long life to which is difficult, is also not required. In addition, using the LED group 250 in the condition of lessened temperature rise prolongs considerably the service life of an LED element 252 that configures the LED group 250.

Further, in the embodiment explained hereunder, pulsating current produced by the full-wave rectification circuit is fed to the LED group 250 and the LED group 250 is configured with the series-connected LED element 252. The pulsating current that has the current interruption period, which varies depending on the number of series-connections of the LED element 252, is fed to the LED group 250; thereby the heat generation of the LED group 250 is reduced. An increase in the number of the series-connections of the LED element 252, which configures the LED group 250, prolongs the duration of the current interruption period. By making the number of the series-connections of the LED element 252, which configures the LED group 250, to be nine or more, it becomes practicable to reliably ensure the current interruption period.

### 2. Providing a straight tube lighting device in a simplified structure

### (1) Simplification and downsizing of the straight tube lighting device 500

In the embodiment explained hereunder, the resin board 570 is provided inside the straight tube LED lamp, and the LED group, which is configured with series-connected LED elements 252, and the driving circuit 550 are provided on the resin board 570. The amount of heat generation of these LED group and the driving circuit 550 is very little compared to the conventional lighting device of this kind, therefore the following embodiment do not need any specific heat dissipation mechanism. Because of this, the straight tube LED lamp gains a very simple structure.

The straight tube LED lamp 510 has a fixing structure that uses the fixture 502 and the fixture 504 for fixing so that the straight tube LED lamp 510 can be installed in a place as desired such as a ceiling or a wall wherever lighting is needed. As mentioned above, a thermal-conductor of metal or heat radiation fins for heat dissipation is not required because the heat generating power of the straight tube LED lamp 510 is weak. Therefore, the straight tube LED lamp 510 is light in weight and small in size compared to the conventional devices. Due to this, the fixtures 502 and 504 to be attached on both ends of the straight tube LED lamp 510 can be made to have a very simple configuration. The lighting device in the following embodiment has a very simple structure compared to the conventional devices. Therefore, in aesthetic point of view at the installation location, there is an effect easy to harmonize with the surrounding state. This effect is a very important advantage and is a response to the significant market needs that lighting devices are always demanded.

### (2) Downsizing of fixtures 502 and 504

In the embodiment explained hereunder, the resin board 570, on which LED group and the driving circuit 550 are installed, is provided inside the straight tube LED lamp 510, but a cooling metal plate is not provided. Therefore, the internal structure of the straight tube LED lamp 510 is very simple. This permits the straight tube LED lamp 510 to be slender in its style. Further, downsizing the fixture 502 and the fixture 504 is also practicable.

### 3. Improved productivity

### (1) Fixing the resin board 570 inside the cylindrical case 512

In the embodiment explained hereunder, the amount of heat generation of the LED element 252 and the driving circuit 550 installed on the resin board 570 is very small. Therefore, the resin board 570 does not need to be provided with a cooling metal plate thereon. Therefore a configuration is employed, wherein two grooves 326 are shaped facing each other inside the cylindrical case 512, made of resin, of the straight tube LED lamp 510 so that both ends of the resin board 570 fit respectively into the grooves when inserted. With this configuration, the resin board 570 is easily fixed to the straight tube LED lamp 510 by inserting the resin board 570 having the LED group and the driving circuit 550 between two grooves 326 facing each other. This simple configuration and an eased fabrication step exhibit an excellent performance in a viewpoint of productivity improvement because the resin board 570 having the LED group and the driving circuit 550 can be easily fixed to the straight tube LED lamp 510.

In addition, a longitudinal warpage of the resin board 570 can be suppressed because both ends of the resin board 570 are secured along the longitudinal axis of the straight tube LED lamp 510. In a conventional structure, fixing the resin board 570 to a metal plate for thermal-conduction has suppressed the warpage of the resin board 570. In the embodiment explained hereunder in contrast, the metal plate for thermal-conduction is not needed, which brings up a new problem how to suppress the warpage of the resin board 570. However, above-stated structure is capable of both responding to the productivity improvement requirement and solving the warpage suppressing problem of the resin board 570.

### (2) Fixing the cylindrical case 512

In the embodiment explained hereunder, an opening is formed on either or both ends of the cylindrical case 512 and the grooves 326 facing each other are formed inside the cylindrical case 512. The resin board 570 has a elongated rectangular shape and the length of the resin board 570 along its longitudinal axis is made longer than the length of the cylindrical case 512 along the longitudinal axis. Therefore, both ends of the resin board 570 protrude from the opening of the cylindrical case 512 when the resin board 570 is inserted in the cylindrical case 512. Grooves 334 are shaped inside the fixtures 502 and 504 provided on both ends of the cylindrical case 512, and both ends of the resin board 570, for example both ends along the longitudinal axis, protruding from the opening of the cylindrical case 512 are inserted into the groove 334 and fixed. Since the resin board 570 is inserted into both the groove 326 of the cylindrical case 512 and the groove 334 of lamp mounts 520 and 522, the cylindrical case 512 and the lamp mounts 520 and 522 become fixed. Thus, the cylindrical case 512 and the lamp mounts 520 and 522 are fixed with a simple structure. By applying glue between the cylindrical case 512 and the lamp mounts 520 and 522 in such simple configuration, the cylindrical case 512 and the lamp mounts 520 and 522 are closely fixed in a simple configuration.

### 4. Breathing mechanics in the straight tube LED lamp 510

### (1) Breathing mechanics through the fixtures 502 and 504

In the embodiment explained hereunder, both ends of the cylindrical case 512 of the straight tube LED lamp 510 have openings, and a communicating passage 544 is formed inside the fixture 502 and the fixture 504; thereby, a fixing base 540 of the fixture 502 and the fixture 504, an opening on the fixing base 542, and the inside of the straight tube LED lamp 510 communicate through the communicating passage 544. With this arrangement, air inside the straight tube LED lamp 510 is allowed to breath in-and-out through the communicating passage. This is capable of preventing condensation of the air inside the straight tube LED lamp 510 attributable to the temperature change. If the breathing of the air inside the straight tube LED lamp 510 is impeded, change of external temperature may cause condensation inside the straight tube LED lamp 510. In the embodiment explained hereunder, the air inside the straight tube LED lamp 510 can easily flow in from the outside through the communicating passage and vice versa. This suppresses a sharp rise of humidity inside the straight tube LED lamp 510 and prevents occurrence of condensation. By this, the straight tube LED lamp 510 is saved from the shortening of its service life. In addition, that an opening is provided in the bottom of the fixture 502 and the fixture 504 reduces the possibility of accidental watering in the opening and restricts ingress of dust.

### (2) Weight reduction of the fixtures 502 and 504 and the power cord routing

In the embodiment explained hereunder, the communicating passage 544 is formed inside the fixture 502 and the fixture 504, which are for attaching the straight tube LED lamp 510. This structure reduces the weight of the fixture 502 and the fixture 504 and eases the resin molding. Further, such structure makes it possible to route out the power cord from the straight tube LED lamp 510 passing through the communicating passage 544.

### 5. Suppressing the amount of heat generation of the LED element 252

### (1) Reduction of heat generation

In the embodiment explained hereunder, a pulsating current is fed to the LED element 252 from a full-wave rectification circuit 230. The voltage applied to the LED element 250 varies periodically and, depending on that, the LED element 252 repeats turn on and off in synchronization with such voltage variation; consequently, there periodically appears a heat generating period and a heat non-generating period. This reduces the amount of heat generation of the LED element as a whole and suppresses the temperature rise of the LED group 250. By ensuring repeated occurrence of the turned-off period of the LED element 252, the effective value of the current flowing through the LED element 252 is reduced and the heat generation of the LED element 252 is suppressed.

### (2) Setting the low current period, the current interruption period for example, according to the number of series-connections of the LED element

In the embodiment explained hereunder, the LED group 250 is configured with plural stages of series-connection of the LED element 252 and a periodically varying power is fed thereto. Thereby suppressing the heat generation of LED group 250 is enabled. The pulsating current fed to the LED element 252 has an interruption period that varies depending on the number of stages of the series-connection. The interruption period elongates according to the increase of the number of stages of the series-connection. By setting the number of stages of the LED element 252, the interruption period can be determined to a proper duration. With this, the LED element 252 is suppressed with respect to its heat generation and can be controlled in a proper condition.

### (3) Reduction of the heat generation by the peak current setting capacitor 222

In the embodiment explained hereunder, the device is operated within a region such that the peak value of the current flowing through the LED element 252 is determined by the capacitance of the peak current setting capacitor 222 of the driving circuit 550. In a region where the peak value of the current flowing through the LED element 252 is dependent on a resistor, the resistor heats requiring a cooling mechanism. However, since the capacitance of the peak current setting capacitor 222 is determined so that the device operates within a region in which the peak value of the current flowing through the LED element 252 is determined by the capacitance of the peak current setting capacitor 222, the power consumption in the driving circuit 550 is very small and the amount of its heat generation is a little. The maximum amount of luminescence of the LED group 250 is determined by the peak value of the current flowing through the LED element 252. This peak value of the current that determines the maximum amount of luminescence is determined by setting the capacitance of the peak current setting capacitor 222 so that the requirement for determination of the peak value of the current is satisfied in accordance with the capacitance of the peak current setting capacitor 222. Thus the heat generation in the lighting device is reduced.

### (4) Reduction of the power consumption and the amount of heat generation by setting the interruption period of the LED current

According to the study by the inventor, when the number of stages of the series-connection of an LED circuit 254 increases, the interruption period, in which the current flowing through the LED element 252 is interrupted, increases. If the LED group 250 is composed of one LED circuit 254, in other words if the LED group 250 is composed of a single stage of the LED circuit 254, the current flowing through the LED element 252 is interrupted momentarily; the interruption duration is very short. Due to this, the effective value of the current flowing through the LED element 252 hardly changes from a current state in which the pulsating current is flowing through the LED element 252. When the number of stages of the series-connection of the LED circuit 254 is five or more, preferably nine or more, the current interruption period of the current flowing through the LED element 252 is ensured in a proper condition. Thereby, the effective value of the current flowing through the LED element 252 is significantly reduced. On the other hand, the intensity of the lighting is affected not only by the effective value of the current but also strongly by the peak value of the current repeatedly supplied. This means that suppressing the effective value of the current by increasing the current interruption period of the current flowing through the LED element 252 will reduce the degree of decrease of the lighting intensity.

### 6. Noise reduction in a lighting device 200 using LED

### (1) Noise reduction by omission of use of a switching element

In the embodiment explained hereunder, the value of the current flowing through the LED group 250 comprised of a series-connected LED element 252 is controlled by setting the capacitance of the capacitor 222 series-connected to the rectification circuit 230 in the driving circuit. Because of this, the use of a semiconductor switching device is not necessary in controlling the effective value of the current. Therefore, noise such as electromagnetic noise that a conventional lighting device using LED may generate is a little. In a clinical setting, various devices are used for the maintenance of life and a highly precise measurement is performed. In such scene, noise must be reduced as much as possible; this means that conventional lighting device has a problem concerning noise generation. In the embodiment explained hereunder, electrical noise is little generated and therefore electromagnetic noise and noise that may intrude into power supply line are little. The lighting device by the present invention brings the most appropriate effect when used in a location where the electromagnetic noise and the noise mixed in the power supply line must be strictly suppressed such as a clinical setting.

### (2) Noise suppression by omission of use of such as an oscillator

The embodiment described below does not need use of a high-frequency generating circuit such as an oscillation circuit. Due to this, noise such as high-frequency noise is not generated. Therefore, the embodiment is suitable as a lighting device for a place where a precision instrument will be operated.

Further, the problem to be solved by and the effect offered by the embodiment are described in the following explanation.

### {Embodiments}

### 1. Structure of the straight tube lighting device 500

Fig. 1 is a drawing of a front view of a straight tube lighting device 500 and Fig. 2 is a plan view of the straight tube lighting device 500. The straight tube lighting device 500 can be mounted directly on a ceiling and a wall or in the other lighting-required places. Further, one or more sets of the straight tube lighting device 500 can be installed using a fixing plate 600. The fixing plate 600 is however not always necessary. It is natural that the straight tube lighting device 500 can be installed in a lighting-required place using the fixture 502 and the fixture 504 of the straight tube lighting device 500. By using the fixing plate 600, the straight tube lighting device 500 is mounted first on the fixing plate 600 and then a plurality of the straight tube lighting devices 500 can be installed in a lighting-required place at a time.

In this embodiment, two sets of the straight tube lighting devices 500 are mounted on the fixing plate 600. Each of the straight tube lighting devices 500 has the straight tube LED lamp 510, the inside of which the resin board 570 having the LED group 250 (refer to Fig. 12) and the driving circuit 550 is accommodated, and has the fixture 502 and the fixture 504 for fixing the straight tube LED lamp 510 on the fixing plate 600 or, if required, in a lighting-required place such as a ceiling and a wall.

Conventionally in lighting apparatuses such as fluorescent lamps, a structure that permits a simple replacement of the fluorescent lamp alone is employed because of the fact that the life of fluorescent lamps is short due to easily-occurring deterioration or fault. In the embodiment of the present invention however, replacing the straight tube LED lamp 510 alone is hardly necessary because the life of the straight tube LED lamp 510 is very long. Therefore, the straight tube LED lamp 510, the fixture 502, and the fixture 504 are integrated into a single body using such as glue to form a structure that does not permit an easy detaching of the straight tube LED lamp 510 alone.

The resin board 570 accommodated in the straight tube LED lamp 510 has the LED group 250 (refer to Fig. 12) configured with a plurality of series-connected LED circuits 254 having LED elements and the driving circuit 550 (refer to Fig. 12) for feeding current to the LED group 250. In this embodiment, it is possible to reduce considerably the heat generation of the LED group 250 and the driving circuit 550 and consequently the temperature rise of the LED group 250 and the driving circuit 550 is very little. Therefore, it is possible to provide the LED group 250 and the driving circuit 550 on the resin board 570; and further, a cooling metal plate or heat radiation fins for heat dissipation is not provided on the resin board 270. Thus, the thickness of the straight tube LED lamp 510 can be made smaller than that of the conventional products; moreover, the structure is very simple.

The fixture 502 is glued on the one end of the straight tube LED lamp 510 using such as adhesive and, similarly, the fixture 504 is glued on the other end of the straight tube LED lamp 510 using such as adhesive. In this embodiment, the straight tube LED lamp 510 is fixed on the fixing plate 600; however, the straight tube LED lamp 510 can be mounted directly on a ceiling and a wall or in the other lighting-required place.

The fixture 502 and the fixture 504 have the same shape, which is detailed below. The fixture 502 has the lamp mount 520 to be secured on the one end of the straight tube LED lamp 510, the fixing base 540 for securing the straight tube LED lamp 510 on the fixing plate 600 or on the other lighting-required place, and a supporting column 530 for securing the lamp mount 520 on the fixing base 540. Similarly, the fixture 504 has the lamp mount 522 to be secured on the other end of the straight tube LED lamp 510, the fixing base 542, and a supporting column 532 for securing the lamp mount 522 on the fixing base 542. The fixture 502 and the fixture 504 are made of resin; the lamp mount 520, supporting column 530, and the fixing base 540 are one-piece resin molded into one single-body; the lamp mount 522, supporting column 532, and the fixing base 542 are one-piece resin molded into one single-body; and further, in this embodiment, the surface of these parts are chromium plated. The communicating passage 544 is formed inside the fixture 502 and the fixture 504, which will be detailed referring to Figs. 5 to 10.

Inside the straight tube LED lamp 510, the substrate 570 is fixed; and on the resin board 570, the LED group 250 (refer to Fig. 13) configured with a plurality of electrically series-connected LED circuits 254 is provided. In the following description, the reference numeral accompanies only one constituent for simplicity, because, if all the constituents of the LED circuit 254 in the referred figure are accompanied by reference numerals, the description will become intricate. The resin board 570 has a configuration as detailed below. Because the heat generation of the LED group 250 and the driving circuit 550 in this embodiment is very small, therefore the resin board 570 does not need a metal plate for heat dissipation and the surface of the resin board 570 is given merely water-resisting treatment only. Thus, the top and the bottom face of the resin board 570 are exposed to the air.

Although the resin board 570 can be formed in a single-board style, forming in a multi segment style of plural resin boards, for example a quaternary form composed of four pieces of resin board 570, is also applicable. Such style of resin boards can be easily fixed similarly to the single-board style resin board by inserting them sequentially between two grooves shaped inside the cylindrical case 512, which is explained below. By dividing the resin board 570 into a multi segment style of plurality as stated above, the warpage of each resin board can be reduced. Since each of the resin boards 570 does not need a metal plate for heat dissipation in this embodiment, the resin board 570 can be used very easily in any of the manners of the single-board style and the plural-partite style.

The alternating current power for operating the driving circuit 550 is supplied through a power cord 590 installed in the communicating passage 444 (refer to Figs. 7 and 8) formed inside the fixture 502 or the fixture 504. The power cord is an ordinary flexible electrical cord for supplying the household commercial alternating current power. Although illustration is omitted, a plug for connection to the plug fixture is installed on the outer end of the power cord 590. The inner end of the cord 590 is connected to the resin board 570 to supply the alternating current power to the driving circuit 550.

Fig. 2 is a plan view of the embodiment given in Fig. 1, wherein two sets of the straight tube lighting device 500 are mounted on the fixing plate 600. On the fixing base 540 of the fixture 502 and the fixing base 542 of the fixture 504, a screw hole 548 (refer to Fig. 8) is provided and the fixing base 540 and the fixing base 542 are secured on the fixing plate 600 with a screw 546. This configuration permits the device to be screwed on a ceiling and a wall or in the other lighting-required place using a screw hole 612 formed on the fixing plate 600.

Fig. 3 is a bottom view of the straight tube lighting device 500. The figure shows the bottom of the straight tube lighting device 500, wherein the fixing plate 600 is not attached. The fixture 502 and the fixture 504 have screw holes 548 for fixing the straight tube lighting device 500 and, further, the communicating passage 544 that leads to the inside of the straight tube lighting device 500 is provided. The power cord, although not illustrated, can be routed out through the communicating passage 544 on either of the fixture 502 or fixture 504.

Fig. 4 is a cross sectional view of the fixture 504 taken along the line A-A in Fig. 1 and the fixture 502 has the exactly same shape. Because of this, the explanation refers to the cross sectional view of the fixture 504 as a representative of these fixtures. The opening of the screw hole 548 given in Fig. 3 has a chamfer 545 on the lamp mount 522 side. Inside the supporting column 532, the communicating passage 544 is formed.

Fig. 5 is the explanatory illustration that illustrates the connection structure between the cylindrical case 512 of the straight tube lighting device 50 and the fixture 502. Fig. 6 is the cross sectional view taken along the line B-B in Fig. 5. A view given in Fig. 7 is the cross sectional view taken along the line C-C in Fig. 5. The fixing structure of the straight tube LED lamp 510 to the fixture 502 and the fixing structure of the straight tube LED lamp 510 to the fixture 504 are the same. Therefore, the fixing structure of the straight tube LED lamp 510 to the fixture 502 is explained as a representative of such structures. The fixture 502 has two spaces each having different inner diameter. These two spaces are a first space 328 and a second space 329. The inside room of the first space 328 is formed a little bit larger than the outer periphery of the straight tube LED lamp 510 and the end of the straight tube LED lamp 510 is inserted into the first space 328. The second space 329 has a radial dimension smaller than that of the first space; the dimensional relationship between them is such that the end part of the straight tube LED lamp 510 is inhibited from inserting. This relationship produces a step 330 at the transition part between the first space 328 and the second space 329; and thereby the end of the straight tube LED lamp 510 is positioned at the step 330. The fixing structure of the straight tube LED lamp 510 to the fixture 504 is the same as that in the fixing structure of the straight tube LED lamp 510 to the fixture 502. Therefore, the insertion position of the end of the straight tube LED lamp 510 is determined by the step 330 produced inside the fixture 504.

Making junctions among the fixture 502, the fixture 504, and each end of the straight tube LED lamp be intimate and air-tight enables prevention of ingress of dust or water through a gap in the junctions between the fixture 502, and also the fixture 504, and each end of the straight tube LED lamp. Further, it is preferable to fix mutually-rigid the fixture 502, fixture 504, and the straight tube LED lamp. To do so, it is preferable to glue the junctions between the first space 328 formed inside the fixture 502 and the fixture 504 and the end of the straight tube LED lamp 510 for fixing them.

Fig. 7 is a cross sectional view taken along the line C-C in Fig. 5; the figure gives the internal structure of the straight tube LED lamp 510. Two grooves 326 are shaped in a positional relationship as shown in Fig. 6 such that they face each other on the right and left side of the inner face of the cylindrical case 512 along the longitudinal axis of the straight tube LED lamp 510. These grooves 326 are shaped by forming a ridge 322 and a ridge 323 on the inner face of the cylindrical case 512; the ridges thus shaped create the groove 326 between the ridges so shaped. The resin board 570 is inserted between two grooves 326 facing each other and fixed. As stated above, since the longitudinal length of the resin board 570 is configured to be longer than the longitudinal length of the straight tube LED lamp 510, both ends of the resin board 570 protrude at both end-openings of the cylindrical case 512.

Fig. 7 is a cross sectional view taken along the line C-C in Fig. 5. The grooves 334 are shaped on the right and left side of the inside of the lamp mount 520 of the fixture 502 facing each other as Fig. 7 shows. The groove 334 may be shaped directly on the inner face of the outer wall of the lamp mount 520. Instead of that, the groove 334 may be shaped by forming ridges 324 on the right and left side of the inner face of the outer wall of the lamp mount 520 as given in Fig. 7. Because the groove 334 on the right and left side of the inner face of the outer wall of the lamp mount 520 is shaped in a position that leads to the groove 326 given in Fig. 6, both ends of the resin board 570 along the longitudinal axis thereof protruding to the right and left from the cylindrical case 512 are inserted into two grooves 334 shaped in a positional relationship as shown in Fig. 6 such that they face each other.

The end of the cylindrical case 512 is fixed with glue on the outer wall of the first space 328 inside the lamp mount 520 and the lamp mount 522. Further, the resin board 570 is inserted into, and fixed to, the grooves 326 shaped on the cylindrical case 512. And moreover, the end of the resin board 570 is inserted into the grooves 334 shaped inside the lamp mount 520 and the lamp mount 522. Thus, with this configuration, the cylindrical case 512 is firmly fixed to the fixture 502 and the fixture 504 with high reliability. This configuration permits the constituents to be fixed very strongly compared to a fixing manner with glue only.

The groove 326 given in Fig. 6 may be shaped inside the cylindrical case 512 along the longitudinal axis by concaving the outer wall of the cylindrical case 512 from the inside thereof. A structure having concaved part on the outer wall of the cylindrical case 512 may reduce the strength of the cylindrical case 512 itself. In this case, the groove 326 can be shaped between the ridge 322 and the ridge 323, as given in Fig. 6, by forming in the reverse direction the ridge 322 and the ridge 323 on both sides of the groove 326 along longitudinal direction of a cylinder 446. This configuration has an effect that enhances the mechanical strength. The cylindrical case 512 may be an ellipse instead of a complete circle. Giving for example an elliptical shape can increase the mechanical strength against the rotational movements between the fixture 502, and also the fixture 504, and the straight tube LED lamp 510.

In the structure given in Figs. 5 to 7, the inside of the cylindrical case 512 is open to the outside air via the first space 328, the second space 329, and the communicating passage 544. Therefore, the air inside the cylindrical case 512 can be replaced with the outside air moderately. If for example the inside of the cylindrical case 512 is a hermetically sealed space, humidity of the air inside the cylindrical case 512 will change depending on the outside temperature and condensation may occur when the outside temperature lowers. Since the inside of the cylindrical case 512 is open to the outside air in this embodiment, there is an effect that condensation will hardly occur. In addition, the temperature change of the outside air does not produce atmospheric pressure difference between the inside and the outside of the cylindrical case 512. Thus, providing a communicating structure between the inside and the outside of the cylindrical case 512 increases reliability.

Figs. 8 to 10 illustrate another embodiment of the fixture 502 and the fixture 504 explained previously referring to Fig. 5 and Fig. 7, in which the fundamental structure is the same but the details of the structure are different. Fig. 8 illustrates another embodiment of the fixture 502; the fixture 504 has a similar embodiment configuration. The lamp mount 520 has the first space 328 and the second space 329 and the step 330 is formed between the first space 328 and the second space 329. When the end of the straight tube LED lamp 510 is inserted, the end of the straight tube LED lamp 510 touches the step 330 and the insertion allows the step 330 to serve as a positioning ledge. The resin board 570 protrudes beyond the end of the cylindrical case 512 of the straight tube LED lamp 510, the protruding end of the resin board 570 fits into the groove 334 shown in Figs. 8 and 9, and the resin board 570 is fixed. To fit the resin board 570 into the groove 334 means the straight tube LED lamp 510 and the fixture 502 are fixed. Since the fixture 504 has the same structure as the fixture 502 has, such fixing feature is the same in the fixture 504. By fixing the inside of the first space 328 and the end of the straight tube LED lamp 510 with glue, the end of the straight tube LED lamp 510 and the fixture 502, and also fixture 504, can be fixed strongly in a hermetically sealed state. Likewise as in the above explanation, the air inside the straight tube LED lamp 510 is open to the outside air via the first space 328, the second space 329, and the communicating passage 544.

The groove 334 is shaped within the thickness of the outer wall of the second space 329. Forming the ridge 324 as illustrated in Fig. 7 and then the groove 334 may be shaped on the ridge 324. The fixture 502 and the fixture 504 are one-piece resin molded single-body. On the bottom face of the fixing base 540, concave-convex portion of a mesh shape is formed as shown in Fig. 10 for reinforcement and warpage prevention. With this structure, the lightweight and strong fixture 502 and the fixture 504 becomes obtainable. In addition, deformation such as warpage with age can be suppressed.

### 2. Electrical parts 30 provided on the resin board 570

Fig. 11 illustrates the configuration of the electrical parts 30 accommodated in the straight tube LED lamp 510. On the one end of the resin board 570, the resistor 220, the peak current setting capacitor 222, the rectification circuit 230, and the fuse 224 are provided. The series-connected LED circuits 254 are arranged regularly over the entirety of the resin board 570. In this arrangement, by providing nine or more sets of the LED circuit 254, the current interruption period of the current flowing through the LED circuit 254 can be ensured and the temperature rise is reduced, as will be explained hereunder.

In Fig. 11, the household commercial alternating current power for example is supplied through the power cord 590 comprised of a lead wire 311 and a lead wire 312 and the power is led to a power supply terminal 208. From the power supply terminal 208, the alternating current power is led to the driving circuit 550 via a wiring provided on the back of the resin board 570, which is not illustrated. From the driving circuit 550, pulsating current is fed to the LED group 250 comprised of the series-connected nine or more sets of LED circuits 254. The pulsating current thus fed drives the LED circuit group 250 to emit light.

In this embodiment, the LED circuits 254 are arrayed in a staggered configuration. Although a linear array is also practicable, the staggered array of the LED circuits 254 as in the embodiment has an advantage of reducing ununiformity in illuminance distribution. In Fig. 11, the peak current setting capacitor 222 is comprised of one ceramic capacitor; however, a plurality of capacitors may be connected thereto in parallel depending on need. To elongate the service life, use of a ceramic capacitor is preferable. Ceramic capacitors are small in size and have an excellent feature of being long service life. However, they have a disadvantage of available capacitance being small. Therefore, although a use of one piece of capacitor can be realistic, the use of, depending on need, plural capacitors connected in parallel offsets such disadvantage; and the peak current setting capacitor 222 can be configured thereby.

In the embodiment of the present invention, the heat generation of the LED circuit 254 and the driving circuit 550 is very little. Therefore, the resin board 550 does not need providing a metal plate for heat conduction. Further, since the amount of the heat generation of the LED circuit 254 is small, the deterioration of the LED elements on the LED circuit 254 is little with a long service life. Thus, the replacing of the straight tube LED lamp 510 in a short period is not necessary. This feature permits installing the straight tube LED lamp 510 in a lighting-required place, such as ceiling and wall, attaching the fixture 502 and the fixture 504 on the straight tube LED lamp 510.

### 3. Configuration and operation of the driving circuit 550

Fig. 12 is a circuit diagram of an electrical circuitry of the straight tube lighting device 500. The electrical circuitry 580 of the straight tube lighting device 500 has the LED group 250 that emits light and the driving circuit 550 that feeds the current for light-emission (wherein the circuit has the same configuration and workings as a primary current feeding circuit 104 of the below-mentioned embodiment). The LED group 250 is held on the resin board 570 and a plurality of the LED circuits 254 are connected in series. As will be mentioned later, increasing the number of stages of the series-connection of the LED circuit 254, i.e., the number of the LED elements to be connected in series, extends the duration of the interruption period of the pulsating current flowing through the LED group 250. Ensuring the interruption period of the pulsating current flowing through the LED group 250 reduces the amount of the heat generation and suppresses the temperature rise of LED elements. In the following embodiment, it is preferable to connect nine or more number of the LED elements 252 in series to ensure the interruption period of the pulsating current flowing through the LED group.

In this description, a circuit that has at least one LED element 252 or parallel-connected plural LED elements 252 is referred to as the LED circuit 254, wherein the number of the LED circuits 254 connected in series is referred to as the number of stages. In the embodiment given in Fig. 12, the LED circuit 254 is comprised of a parallel-connected three LED elements 252. In addition, about 30 of the LED circuits 254 are connected in series. In this description, such configuration is expressed as "the LED circuit 254 is connected in series of 30-stage". When the LED circuit 254 is connected in series of five or more stages preferably nine or more stages, the interruption period effective for suppressing the heat generation can be ensured. When an alternating current power source 100 is a 100-volt household commercial power source, excessively large number of stages reduces the energization duration overly; and as a consequence, the ensuring the amount of light emission becomes difficult. For the 100-volt alternating current powersource, an acceptable number of stages is not more than 40 stages and preferable number is 35 stages or smaller. If increasing the number of the LED element 252 is intended, it is preferable to increase the number by adding newly the circuit illustrated in Fig. 12.

The driving circuit 550 for feeding current to the LED group 250 has the peak current setting capacitor 222, the rectification circuit 230, and the fuse 224; these constituents are connected in series. To the peak current setting capacitor 222, the resistor 220 is connected in parallel to discharge the charge stored in the peak current setting capacitor 222. Further, the power source terminal 208 is provided. To this power source terminal 208, the alternating current power is fed from the alternating current power source 100 via the power cord 590 mentioned previously. It is dangerous if a charge in the peak current setting capacitor 222 at the time when the power source was turned off remains as an undischarged residual. This residual may develop to a dangerous level when the power source is again turned on, because it is probable that a rush current occurring on turning on the power source again may act bad due to a composite relation with the residual charge in the peak current setting capacitor 222. Thus, the residual charge in the peak current setting capacitor 222 should preferably be discharged promptly as much as possible on turning off the power source. The resistor 220 is provided for this purpose.

Fig. 13 is a working waveform chart of the electrical circuitry given in Fig. 12. This working waveform is a simulation result obtained by applying the simulation program QUCS, presented by University of Yamanashi, to the circuitry given in Fig. 12. The conditions of the simulation is: the frequency of the alternating current power source 100 is 50 Hz and the peak voltage is 144-volt; the capacitance of the peak current setting capacitor 222 is 1 µF and the resistance of the resistor 220 is 100 kΩ; the resistance of the fuse 224 is 100 Ω; and the number of stages of the LED circuit 254 is 32-stage. To exclude the behavior in a transient state, the simulation started 0.02 seconds later; the graph indicates behavior until 0.07 seconds passes.

All the characteristic charts and each of the waveform charts subsequent to the description herein are a result of the application of the simulation program QUCS presented by University of Yamanashi.

Waveform V102 is a voltage waveform of the alternating current power source 100 and waveform V104 is a terminal voltage waveform of the peak current setting capacitor 222. A current I2 is a current fed to the input terminal 232 of the full-wave rectification circuit 230. The current I2 is full-wave rectified in the full-wave rectification circuit 230 and outputted in a form of a pulsating current, which is then fed to the LED group 250. The horizontal axis represents time elapsed in the unit of second.

The behavior of the LED element of the LED circuit 254 is as follows: When a forward apply voltage to the LED element 252 is increased gradually from a state of approximately zero volts, current begins to flow when the forward voltage exceeds the current flow beginning voltage VLC; and then the light emission begins. When the voltage is decreased in contrast, the current is shut off at the time point when the applied voltage becomes lower than the current flow beginning voltage VLC; and then the light emission ceases.

Although the behavior is not indicated on the waveform chart in the period before 0.02 seconds in Fig. 13, the current flowing through the LED group 250 pauses when the voltage forwardly applied on the LED group 250 becomes lower than the voltage, which is the product of the VLC voltage and the number of the series-connection stages of the LED circuit 254. In the state shown in Fig. 13, a voltage lower than the voltage to supply a current through the LED group 250 is held in the peak current setting capacitor 222. This means that the voltage applied on each of the LED elements 252 is maintained at a voltage level lower than the current flow beginning voltage VLC of each LED element 252. This state is the same state as the one at the time point of 0.027 seconds. As the voltage of the alternating current power source gradually reaches zero volts, the feeding voltage to the LED group 250 increases.

From the time 0.02 seconds, waveform V102 of the alternating current power source 100 goes into an increasing state. Then the feeding to the LED group 250 occurs in a state in which the alternating voltage fed from the alternating current power source 100 is added to the terminal voltage of the peak current setting capacitor 222 charged in the reverse polarity. Thus, a voltage higher than the current flow beginning voltage VLC is applied on each of the LED elements 252 in the LED group 250; then current begins to flow through each of the LED elements in the LED group 250; and then each LED element begins light emission. At the time of 0.025 second, waveform V102 of the alternating current power source 100 reaches its maximum. When the forward voltage applied on the LED group 250 decreases and the voltage applied on each of the LED elements 252 becomes lower than the current flow beginning voltage VLC, the current I4 flowing through the LED group 250 is interrupted. In this way, a period in which the current I4 flowing through the LED group 250 is interrupted is produced every half-cycle of the alternating current power source. As will be explained later, the decreasing characteristics and the timing of interruption of the current I4 flowing through the LED group 250 become constant regardless of the number of stages in the LED group 250. On the other hand, the time point of starting the current flowing is delayed more as the number of stages in the LED group 250 increases. Therefore, the length of the period between the time point of the interruption of the current I4 flowing through the LED group 250 and the time point of the start of the current flowing becomes longer with the increase in the number of stages in the LED group 250. The explanation for these follows.

### 4. The interruption period of the current I4 flowing through the LED group 250 and the number of stages of the series-connections of the LED element

The period, during which the current I4 flowing through the LED group 250 is interrupted, is determined by the number of the series-connections of the LED elements 252 that configures the LED group 250, that is, the number of stages of the LED circuit 254. Fig. 14 is a graph that shows the behavior of the current I4 flowing through the LED group 254 during the current interruption period where the number of stages of the LED circuit 254 is varied. The current I4 flows through the LED group 250 every half-cycle of the power source waveform. The flow-ceasing timing of the current I4 is roughly the same regardless of the number of stages of the LED circuit 254. The flow-beginning timing is dependent on the number of stages of the LED circuit 254. When the number of stages of the LED circuit 254 is 32-stage, current begins to flow after the time point of peak of the current I4 in the LED group 250. This causes a state in which the peak value of the current I4 in the LED group 250 is lowered; this is attributable to the delay of the current flow beginning point. When the number of stages for configuring the LED group 250, that is, the number of the series-connected LED elements 252, is deducted, the current flow beginning time point of the current I4 in the LED group 250 shifts forward. When the number of stages is 20-stage, current begins to flow before the peak point of the current I4. When the 20-stage in the LED group 250 is further deducted into 10-stage, the current flow beginning time point of the current I4 in the LED group 250 shifts forward further. In this way, the flow-ceasing timing of the current I4 in the LED group 250 is invariable regardless of the number of stages. Therefore, the forward shifting of the current flow beginning time point of the current I4 by deducting the number of stages shortens the length of the current interruption period of the current I4 in the LED group 250.

The elongating of the interruption period shortenes the heat generating period of the LED group 250. Therefore, the increasing of the number of stages can delay the current flow beginning time point of the current I4. Thereby, the interruption period is elongated and consequently the amount of the heat generation of the LED element 252 reduces. However, this results in a reduction in the light emitting period. It is therefore preferable to set the number of stages properly to maintain the relationship between the amounts of the light emission and the heat generation at an appropriate condition.

### 5. The peak value of the current I4 in the LED group 250 and the number of stages of series-connection of the LED element

On the graphs of 10-stage and 20-stage in Fig. 14, their peak values of the current I4 in the LED group 250 matches. In the graph for 32-stage, the current rises after the peak of the current I4 passed; therefore the peak value of the current I4 is low. Thus, if the number of stages is such that the current I4 begins to flow at the time point before reaching its peak, the peak value of the current I4 is constant regardless of the number of stages of the series-connection of the LED element 252. The peak value of the current I4 determines the maximum amount of the light emission of the LED element 252. Thus, if the number of stages is such that the current I4 begins to flow at the time point before reaching its peak, the maximum amount of the light emission is the same regardless of the number of stages.

### 6. Control of the peak value of the current I4 flowing through the LED group 250

Fig. 15 is a graph that describes change of the peak value of the current I4 in the LED group 250 with respect to the circuitry given in Fig. 12, wherein the resistance of the resistor 220 connected to the peak current setting capacitor 222 is 1 MΩ, the resistance of the fuse 224 is 100 Ω, and the capacitance of the peak current setting capacitor 222 is varied from 0.1 to 20 µF. As the capacitance of the peak current setting capacitor 222 increases, the peak value of the current I4 in the LED group 250 largely increases. This is a region such that the peak value of the current I4 is determined by the capacitance of the peak current setting capacitor 222.

Figs. 16 and 17 are graphs that describe change of the peak value of the current I4 in the LED group 250, wherein the resistance of the resistor 220 connected to the peak current setting capacitor 222 is 10 kΩ, the resistance of the fuse 224 is 100 Ω, and the capacitance of the peak current setting capacitor 222 is gradually varied from 0.001 µF. The graphs describe a region such that the increase of the capacitance of the peak current setting capacitor 222 in the range of 0.001 µF to 0.02 µF decreases the peak value of the current I4 in the LED group 250 on the contrary. In contrast to this, when the capacitance of the peak current setting capacitor 222 exceeds 0.025 µF, the current goes into a region such that the increase of the capacitance causes the peak value of the current I4 in the LED group 250 to increase sharply. It however should be noted that these graphs describe only the change behavior of the current I4 in the LED group 250 with respect to the capacitance of the peak current setting capacitor 222. Therefore, the current I4 needs to be fed as a more-large current to make the LED group 250 emit lighting light.

When the capacitance of the peak current setting capacitor 222 is increased more, the current behavior goes into a region such that the peak value of the current I4 in the LED group 256 sharply increases depending on the increase of the capacitance of the peak current setting capacitor 222 up to 20 µF as Fig. 17 describes. If the capacitance of the peak current setting capacitor 222 exceeds 50 µF, the current behavior goes into a region such that the peak value of the current I4 in the LED group 250 increase little.

For operating the LED group 250 as a lighting device, it is preferable to feed a current of over 50 mA. As can be known from Fig. 17, this preferred current requires the capacitance of the peak current setting capacitor 222 to be 0.5 µF or more.

Figs. 16 and 17 teach that, in the region of 0.025 µF or more, in which the peak value of the current I4 in the LED group 250 increases depending on the capacitance of the peak current setting capacitor 222, discharging the charge stored in the peak current setting capacitor 222 feeds the current I4 to the LED group 250, consequently the heat generation of the driving circuit 550 enters reduced state. The peak value of the current I4 in the LED group 250 described in Fig. 14 can be set in accordance with the capacitance of the peak current setting capacitor 222. The light-emission intensity of the LED group 250 can be set and controlled with the capacitance of the peak current setting capacitor 222. As described in the explanation of Fig. 14 on the other hand, the interruption period of the current I4 can be set and controlled by the number the series-connections of the LED element 252 that configures the LED group 250, that is, the number of stages in the LED group 250.

Figs. 18 is a graph that describs change of the peak value of the current I4 in the LED group 250, wherein the resistance of the resistor 220 connected to the peak current setting capacitor 222 in parallel is 1.5 kΩ, the resistance of the fuse 224 is 100 Ω, and the capacitance of the peak current setting capacitor 222 is varied from 0.01 µF to 20 µF. The increasing of up to about 0.5 µF of the capacitance of the peak current setting capacitor 222 varies the peak value of the current I4 in the LED group 250 little. However, if the capacitance exceeds 0.5 µF, the peak value of the current I4 in the LED group 250 largely increases. Therefore, it is possible to decrease significantly the heat generation of the driving circuit 550 in the region in which the increase of the capacitance of the peak current setting capacitor 222 increases the peak value of the current I4.

Fig. 19 is a graph that describes change of the peak value of the current I4 in the LED group 250 with respect to the circuitry given in Fig. 12, wherein the capacitance of the peak current setting capacitor 222 is 1 µF, the resistance of the fuse 224 is 100 Ω, and the resistance of the resistor 220 connected to the peak current setting capacitor 222 in parallel is varied from 1 kΩ to 50 kΩ. The resistor 220 is a discharging resistor to discharge the charge in the peak current setting capacitor 222 stored on turning off the power source. If this resistor is omitted, a charge in the peak current setting capacitor 222 charged at the time of the turning off of the power source switch remains as charged. In the actual behavior, this charge is thought leaking little by little, but the charge stays yet for long time in the peak current setting capacitor 222. When the power source is again turned on, after the power source is tuned off once, before the discharging from the peak current setting capacitor 222 completes, a transient phenomenon may occur involving the supply voltage at the time of power source turning on and the charge stored in the peak current setting capacitor 222. Such composite transient phenomenon causes a large transient current to flow in circuit components such as the LED element 252 causing possible damage thereon. Because of this behavior, it is preferable to discharge in a short time the charge in the peak current setting capacitor 222 on the turning off of the power source switch.

A gradual increase of the resistance of the resistor 220 from 2 kΩ decreases the peak value of the current I4 in the LED group 250. This is due to the decrease of the current flowing through the resistor 220 and this decrease is thought attributable to the increase in the impedance of the parallel circuit of the peak current setting capacitor 222 and the resistor 220. However, if the resistance of the resistor 220 exceeds 3 kΩ, particularly in excess of 5 kΩ, a distinctive phenomenon occurs. The phenomenon is that, with the resistance increase, the value of the current I4 flowing through the LED group 250 stays unchanged or increases a little otherwise. This behavior is thought to be relative to the charging-discharging of the peak current setting capacitor 222 and the phase of the power source voltage.

As stated above, the heat generation of the resistor 220 is thought to be very little under a state such that the peak value of the current I4 in the LED group 250 stays unchanged or increases a little otherwise regardless of the increase of the resistance. Therefore, it is preferable that the resistance of the resistor 220 should be set to a value that lies in the region in which the peak value of the current I4 behaves unchanged or shows little increase regardless of the increase of the resistance of the resistor 220. The heat generation of the resistor 220 is thought to become large in the region in which the peak current value of the current I4 in the LED group 250 decreases with the increase of the resistance of the resistor 220. In contrast, the heat generation of the resistor 220 is very little in the region such that the peak value of the current I4 in the LED group 250 stays unchanged or increases a little otherwise regardless of the increase of the resistance. Such region is a region in which the heat generation of the driving circuit 550 is very little.

Fig. 20 describes a result of the simulation of the transient current flowing through the LED group 250, wherein a voltage of 75 V is applied at the time of current-on under the condition: the resistance of a resistor connected to the peak current setting capacitor 222 in series, namely the resistance of the fuse 224 in this embodiment, is 100 Ω; the capacitance of the peak current setting capacitor 222 is 1 µF; and the resistance of the resistor 220 is 1 MΩ. A peak current about two times the peak current under a steady state flows. Actually in the worst case, there is a possibility that a voltage of 144 V at the time of current-on and a peak current about four times the current under the steady state may flow. If the resistance of the resistor connected to the peak current setting capacitor 222 in series is reduced more, further larger current possibly flows.

Fig. 21 describes a result of the simulation of the transient current flowing through the LED group 250, wherein a voltage of 75 V is applied at the time of current-on under the condition: the resistance of a resistor connected to the peak current setting capacitor 222 in series, namely the resistance of the fuse 224 in this embodiment, is 50 Ω; the capacitance of the peak current setting capacitor 222 is 1 µF; and the resistance of the resistor 220 is 1 MΩ. Compared to the result described in Fig. 20, the result described in Fig. 21 shows that a peak current larger than the peak current under the steady state flows. A trial product was prepared and tested under a condition wherein the resistance of the fuse 224 is 50 Ω and 100 Ω; the test confirmed that the LED elements 252, which are the constituent of the LED group 250, were not damaged. This embodiment however tacitly teaches that if the resistance of the fuse 224 is less than 50 Ω, a large rush current will flow inviting a very dangerous situation.

Figs. 22 is a graph that describes change of the peak value of the current I4 flowing through the LED group 250, wherein the resistance of a resistor connected to the peak current setting capacitor 222 in series, namely the resistance of the fuse 224 in this embodiment, is varied from 50 Ω to 10 kΩ. When the resistance of the resistor connected to the peak current setting capacitor 222 in series is increased, the peak value of the current I4 flowing through the LED group 250 decreases correspondingly. In this condition, in which the peak value of the current I4 flowing through the LED group 250 is decreasing, the resistor connected to the peak current setting capacitor 222 in series generates heat, which implies that the driving circuit 550 may develop into a heat-generating state. In this state, the maximum amount of the light emission is reduced; it is therefore preferable to lower the resistance of the resistor connected to the peak current setting capacitor 222 in series. Two trial products having 50 Ω and 100 Ω of resistor have confirmed that the rush current has given no damages; however, a resistor having a resistance larger than 50 Ω or 100 Ω may be also used. The resistor connected to the peak current setting capacitor 222 in series serves as a suppressor to suppress the rush current at the time of the power source turned on. Therefore, a larger resistance provides a larger suppressing effect against the rush current. From the viewpoint of a comprehensive judgment, the resistor connected to the peak current setting capacitor 222 in series is preferred to have a resistance in the range from 50 Ω to 1 kΩ. The graph in Fig. 22 describes that the peak value of the current I4 flowing through the LED group 250 decreases when a resistor of 1 kΩ is used, which is within the usable range.

Judging from the graph in Fig. 22, the peak value of the current I4 in the LED group 250 does not decrease much when the resistance of the resistor connected to the peak current setting capacitor 222 in series is 500 Ω. Therefore, when the resistance of the resistor connected to the peak current setting capacitor 222 in series is within the range of 50 Ω to 500 Ω, the resistance is quite appropriate value.

### 7. Number of stages of series-connection in the LED group 250 and the current interruption period

Fig. 19 is a graph that describes the waveform of the current I4 flowing through the LED group 250 with respect to the circuitry given in Fig. 12, wherein the capacitance of the peak current setting capacitor 222 is 5 µF, the resistance of the resistor 220 is 1 MΩ, the resistance of the fuse 224 is 100 Ω, and the employed number of stages in the LED group 250 is 2-stage and 9-stage. The waveforms of the current I4 for the cases of 2-stage and 9-stage are almost same each other in their peak values. Their current interruption periods are different each from the other. The current interruption period for the current I4 in the case of 2-stage appear only for an extra-short time. In contrast to that, the current interruption period for the current I4 is ensured in the case of 9-stage.

That the peak values of the current I4 are almost same indicates that the maximum amounts of the light emission of the LED elements 252 in the LED group 250 are almost same. On the other hand, the area that is defined by the waveform of the current I4 has a close relationship to the heat generation. The difference between areas defined by the waveforms of the 2-stage and the 9-stage indicates the difference in the heat generation. That is, configuring the LED group 250 in the 9-stage generates heat in an amount by far smaller than that in the 2-stage configuration.

Increasing the number of stages of the series-connection of the LED element 252 more than 9-stage in configuring the LED group 250 enables the LED element 252 to ensure the reduction of amount of heat generation maintaining the maximum amount of light emission at the same value.

Embodiments described below work in variety and provide many kinds of effects. Described embodiments are capable of solving not only the above-mentioned problem described under the heading of Problem to be Solved by the Invention but also other problems not described under the above-stated heading. Further, embodiments hereunder stated provide not only effects those described under the above-stated heading of Advantageous Effect of the Invention but also other effects not described under the above-stated heading. The following describes some of the basic workings and effects of the embodiments mentioned below. The workings and effects described below include the above-mentioned problem or purpose described under the heading of Problem to be Solved by the Invention and further includes other effects and workings than those described under the heading of Advantageous Effects of the Invention. Even only one effect of these effects is exhibited, it is very meaningful. It is not necessary to exhibit following effects at the same time. It however should be noted that having multiple effects collectively, greater effect can be obtained as a lighting device by the synergistic effect.

### {Workings and effects 1: Suppressing temperature rise of the LED element}

In the embodiment described below, the current flowing through the LED element (hereinafter referred to as LED light-emission current) has current-flowing periods including at least a large current period and a low current period. In both the large current period and the low current period, the LED element is in the light-emission state with the LED light-emission current. To be exact, although the element serves as a lighting element in both periods, the primary purpose of each of the periods is different. The large current period (hereinafter referred to as primary lighting period) is a period in which the LED element of the LED group allowed to emit light for lighting; the main purpose of the primary lighting period is to exhibit lighting. On the other hand, the low current period, in which the current flowing through the LED element is small (hereinafter referred to as a cooling period) is a period of which primary purpose is to allow the element to cool. In the below-mentioned embodiment, the LED light-emission current flowing through the LED element has current-flowing periods: the primary lighting period and the cooling period. The primary lighting period and the cooling period are repeated periodically to appear. Thus, the temperature rise of the LED element can be suppressed.

In the cooling period, the temperature rise of the LED element is suppressed and further the heat generation of the primary current feeding circuit is suppressed. Thereby, the temperature rise of the constituting parts of the primary current feeding circuit can be suppressed.

### {Workings and effects 2: Suppressing flickering}

During the cooling period, the current flowing through the LED element may be made zero to cease light emission. However in the following embodiment, the current does not become zero because an LED light-emission current 6 flowing through the LED element is ensured to flow for the suppression of flickering of a lighting device even during the cooling period. Thus, the light emission of the LED element is maintained even during the cooling period.

In the following embodiment, the circuit constants are determined so that the peak value of the current during the primary lighting period is more than 100 mA. This ensures the needed illuminance. On the other hand for example, the circuit constants are also determined so that the minimum of the current is 10 mA or smaller during the cooling period. However, the current still flows during the cooling period, not zero. More particularly, the circuit constants are determined so that the minimum of the current during the cooling period is 10 mA or smaller but 2 mA or more, preferably 3 mA or more. By suppressing the current during the cooling period small in this way, conflicting problems of suppressing the flickering of a lighting device, suppressing the temperature rise of the LED element, and assuring the needed illuminance become solvable.

### {Workings and effects 3: Simplification of circuitry}

(1) In the embodiment described below, the LED light-emission current flowing through the LED group is produced by synthesizing at least the primary current fed from the primary current feeding circuit and the bias current fed from the bias current feeding circuit. When only the primary current supplied from the primary current feeding circuit is fed to the LED element in the LED group, the LED light-emission current flowing through the LED group comes to have a current interruption period in which current does not flow. For example in the current interruption period, the heat generation due to the primary current fed from the primary current feeding circuit is almost zero, which largely contributes to the suppression of the temperature rise of the LED group. In contrast, the bias current feeding circuit feeds at least some current during the current interruption period. Providing the primary current feeding circuit and the bias current feeding circuit in this way reduces the flickering with comparatively simple circuitry.

(2) The LED primary current fed from the primary current feeding circuit flowing through the LED group has the current interruption period. In the following embodiment, the current interruption period is produced by combining the series-connection of plural LED elements and the pulsating current of which current value changes gradually. For example, by feeding the commercial alternating current to the primary current feeding circuit, the pulsating current can be fed into the series-connection circuit of the LED elements. In addition, by increasing the number of stages, which is the number of the series-connections of the LED elements, the LED primary current flows, which is the current flowing through the LED element having the current interruption period determined in accordance with the number of stages N.

Increase of the number of stages N of the series-connections of the LED element elongates the current interruption period of the LED primary current. That is, the increase of the number of stages N of the series-connections of the LED elements shoertenes the primary lighting period with the cooling period elongated. Thus, the use of the LED element for lighting in combination with the commercial alternating current fed from the commercial power source enables the cooling period to be ensured. Then, the temperature rise of the LED element for lighting can be reduced with a simple circuitry.

In addition, the circuitry of the primary current feeding circuit itself is also simplified much. Moreover, the heat generation of these simple circuits is suppressed during the cooling period and consequently the temperature rise of the constituting part of the primary current feeding circuit is suppressed. In the following embodiments, their lighting devices work normally even if a cooling metal fin for cooling the LED element is omitted. Further, the lighting devices in the embodiments described below work normally even if a cooling metal fin for cooling the primary current feeding circuit is omitted.

### {Workings and effects 4: Low noise}

Since the waveform of the LED light-emission current 6 is controlled by variation of the value of the alternating current to be fed to the primary current feeding circuit and the number of stages of the series connecton of the LED element, the noise is suppressed to a very low degree. Therefore the present invention is very useful as an application for noise-sensitive place. The commercial power source supplies a low frequency alternating current or voltage of, for example in Japan, 50 Hz or 60 Hz. This frequency is suitable for repeating the primary lighting period and the cooling period. The producing of the LED light-emission current 6 to flow through the LED element 252 using this commercial power source enables the configuring of the primary current feeding circuit without use of MOSFET (metal-oxide-semiconductor field-effect transistor) or IGBT (Insulated-Gate Bipolar Transistor). Then, noise generation is suppressed.

### 8. Circuitry of the lighting device 200

The electrical circuit of the lighting device 200 is explained referring to Fig. 24. The lighting device 200 is comprised of the LED group 250 that emits lighting light, the primary current feeding circuit 104 that feeds a primary current 2 to the LED group 250 for light emission, and a bias current feeding circuit 700 that feeds a bias current 4 to the LED group 250. For an explanation convenience, the primary current feeding circuit 104 is expressed as the driving circuit 550 as the case may be. The LED group 250 is held on the resin board, which will be explained later. The LED group 250 is configured with five or more preferably nine or more LED circuits 254 connected in series, wherein one LED circuit 254 is configured with at least one LED element 252 or with parallel-connected plural, two or three elements for example, LED elements 252. In this description, a circuit that has at least one LED element 252 or parallel-connected plural LED elements 252 is referred to as the LED circuit 254, wherein the number of the LED circuits 254 connected in series is referred to as the number of stages.

In the embodiment given in Fig. 24, the LED circuit 254 is comprised of a parallel-connected two LED elements 252. Further, 16 of the LED circuits 254 are connected in series. In this description, that configuration is expressed as "the LED circuit 254 is connected in series of 16-stage". In Fig. 24, the circuitry of the LED circuit 254 is illustrated partly and the rest is omitted for simplicity, because, if all the details of the circuitry is illustrated, the description will become intricate. In the following embodiment, the number of stages of LED circuit 254 is 16-stage. However, even when the LED circuit 254 is series-connected in five or more stages preferably nine or more, suppressing effect for the temperature rise of the LED element 252 and the primary current feeding circuit 104 are still obtainable.

As an example of the circuitry illustrated in Fig. 24, waveforms of voltage or current in the workings of an embodiment illustrated in Fig. 25 is described in Figs. 26 to 29. An explanation of the workings of the circuitry illustrated in Fig. 24 follows. The waveforms of voltage or current described in Figs. 26 to 29 are simulation results. The results has been obtained by applying a simulation program QUCS to the circuitry given in Fig. 25. QUCS is a simulation program publicly opened from University of Yamanashi and Tottori University for its usage, and is presented by QUCS Team.

As explained below, the circuitry given in Fig. 24 prefers the number of stages of the series-connection of the LED circuit 254 to be nine or more from the view point of reduction of the temperature rise when the effective value of the power source voltage is 100 V. In addition, to ensure an adequate illuminance as a lighting device, the number of stages of 40-stage or less is preferable for the alternating current power source of which effective voltage is 100 V. If increasing number of the LED elements 252 is intended to ensure the illuminance, increasing the LED element 252 by parallel connection is preferable. When the effective value of voltage of the power source is 200 V, the preferred number of stages is doubled stage of 18-stage or more but 80-stage or less.

In Fig. 24, the alternating current power source 100 is a house hold commercial power source that provides commercial electric power for ordinary households. In Japan, the commercial power source for ordinary households is an alternating current power source of effective voltage of 100 V and the frequency is 50 or 60 Hz. Explanation follows under the condition that the commercial power of 50 Hz at an effective voltage of 100 V is fed to the lighting device 200 from the alternating current power source 100 of the commercial power source. The primary current feeding circuit 104 outputs the primary current 2, which feeds an LED primary current 3 through the LED group 250. The primary current feeding circuit 104 has a parallel circuit 110 composed of the capacitor 222 and the resistor 220, rectification circuit 230, and the fuse 224, wherein they are connected in series. In this embodiment, the reference numeral 230 denotes the full-wave rectification circuit. Further, a plug fixture 105 is provided as the power terminal for the lighting device 200 and alternating current power is fed from the alternating current power source 100 of the house hold commercial power source to the lighting device 200 through the plug fixture 105.

### 9. General characteristics of the LED element 252

The following explains the general characteristics of each LED element 252 that the LED group has as the light-emission component. When applying a forward voltage VL on the LED element 252 and rising gradually the voltage VL from a state of approximately zero volts, a current IL begins to flow in the forward direction when the voltage exceeds the voltage VLC (V) and the LED element 252 begins to emit light. The current IL increases with the increase of the voltage VL but the increasing rate is gentler than the ordinary diodes. This indicates that the LED element 252 has a large internal resistance and that the heat generation caused by the current IL flowing through the LED element 252 is very large compared to the one in the rectification diode.

When a voltage sufficiently larger than the voltage VLC (V) is applied on the LED element 252, the current IL flows through the LED element 252, which then emits light. With a gradual decrease of voltage applied on the LED element 252 in light-emitting state, the current IL flowing through the LED element 252 decreases and the amount of light emission decreases. When the voltage applied on the LED element 252 reduces below the voltage VLC (V), the current IL flowing through the LED element 252 is interrupted and the LED element ceases emitting light.

The LED element 252 includes a green LED, a red LED, a blue LED, and a white LED. The voltage of VLC (V) of white LEDs tends to be higher than LEDs of other colors. Further, white LEDs tend to show a larger internal voltage drop compared to LEDs of other colors. This indicates that white LEDs for lighting use generates larger amount of heat with respect to current. In addition, green LEDs tend to show a higher voltage of VLC (V) compared to red LEDs.

### 10. Fundamental workings of the circuit given in Fig. 24

The following explains the light emission workings of the LED circuit 254 of the LED group 250 given in Fig. 24. The alternating current voltage supplied from the alternating current power source 100 of the commercial power source is applied on the parallel circuit 110, which has the capacitor 222 and the resistor 220, in the primary current feeding circuit 104 and the series circuit, which has the rectification circuit 230 and the fuse resistor 224, through the plug fixture 105 for the lighting device 200. With increase of the amplitude of the waveform of the alternating current voltage, the voltage applied on the input terminal 232 of the rectification circuit 230 increases and an output appears across the terminals of the output terminal 234 of the rectification circuit 230 and then the voltage applied on the LED group increases. Each of the LED elements 252 in the LED group 250, as stated above, allows a current to begin to flow through each LED element 252 when the applied voltage exceeds the voltage of VLC, and each LED element 252 begins to emit light.

In the embodiment shown in Fig. 24, if the LED circuit 254 is series-connected in 16-stage for example, voltage is supplied to the LED group 250 from the output terminal 234 of the rectification circuit 230. When an applied voltage V12 on the LED group 250 exceeds a voltage about 16 times the voltage VLC of each LED element 252 of the LED group 250, the LED light-emission current 6 begins to flow through the LED group 250. In this state, receiving a power from the alternating current power source 100 via the plug fixture 105, a current 11 flows through the parallel circuit 110, the rectification circuit 230, the LED group 250, and the fuse 224. With this current 11, the primary current 2 is outputted from the terminal 234 of the rectification circuit 230 and the LED primary current 3 flows through the LED group 250. With the light-emission current 6 flowing through the LED group 250 including this LED primary current 3, each LED element 252 of the LED group 250 emits light.

With increase of an alternating current of the current 11, the primary current 2 increases and an LED primary current 21 flowing through the LED group 250 increases. The LED primary current 21 is a current based on the primary current 2 included in the LED light-emission current 6 flowing through the LED group 250. Further, the bias current 4, which will be explained below, is fed to the LED group 250 from the bias current feeding circuit 700. As the bias current 4 is fed, a LED bias current 41 flows through the LED group 250. The LED light-emission current 6 is a current determined in accordance with the LED primary current 21 and the LED bias current 41.

The current 11 flowing through the primary current feeding circuit 104 is determined in accordance with the alternating current voltage supplied from the alternating current power source 100. Therefore, the primary current 2 is a pulsating current synchronized with the alternating current voltage supplied from the alternating current power source. When, increasing gradually, the current value of the current 11, which is a pulsating current, passes its absolute peak value, the absolute value of the current 11 begins to decrease. As the absolute value of the current 11 decreases, the primary current 2 decreases causing the LED primary current 21 to decrease. In the state in which the absolute valued of the current 11 and the LED primary current 21 decrease, the applied voltage V12 applied on the LED group 250 from the two of the output terminals 234 of the rectification circuit 230 decreases gradually; a waveform simulation of which will be described below. When the applied voltage V12 on the LED group decreases below a voltage about 16 times the voltage VLC, the LED primary current 21 flowing through the LED group 250 is interrupted. The "16 times" comes from the number of stages of the series-connection of the LED element 252 of the LED group. When the LED primary current 21 is in the interrupted state, only the primary current 2 is fed to the LED group 250. If no currents other than that is fed, the interruption of the LED primary current 21 causes the light emission of the LED group 250 to cease. Since the rectification circuit 230 is a full-wave rectifier, the above-stated behavior occurs repeatedly in synchronization with the half cycles of the alternating current voltage fed from the alternating current power source 100, and the LED primary current 21 becomes interrupted in synchronization with the half cycles of the alternating current voltage. The heat generation of the LED element 252 is suppressed at least in this interrupted state. That is, the period in which the LED primary current 21 is interrupted serves as the cooling period for suppression of the temperature rise of the LED element 252. On the other hand, the LED element 252 lights intensely while the LED primary current 21 flowing through the LED circuit 254 has a large value. The period in which the LED primary current 21 has a large value serves as the primary lighting period to ensure the illuminance as a lighting device.

The bias current feeding circuit 700 feeds the bias current 4 at least while the prime current 2 is reduced namely during the cooling period. As will be explained below, the bias current feeding circuit 700 has a bias capacitor and a charging current thereto is fed through a circuit 770 or a circuit 772. When the primary current 2 decreases and the applied voltage V12 decreases, the bias current 4 is fed to the LED group 250 from the bias current feeding circuit 700. The bias current 4 causes the LED bias current 41 to flow through the LED group 250. Therefore, even in the interruption period, in which the LED primary current 21 is interrupted, the LED bias current 41 flows through the LED group; consequently the lighting-cease of the LED element 252 in the LED group 250 is prevented.

If the bias current 41 is not fed, the LED element 252 does not emit light during the interruption period of the LED primary current; accordingly the light of the lighting device 200 greatly flickers. However, the bias current 4 flows the LED bias current 41 through the LED group 250, which prevents lighting-cease of the LED elements 252 although their amount of light emission lowers. Thereby, the light flicker of the lighting device 200 can be significantly improved. The bias current 4 is very small compared to the primary current 2. The value of the bias current 4 is one tenth or less of the peak value of the primary current 2 for example, which allows maintaining the cooling effect on the LED element 252 during the cooling period. Providing in this way the bias current feeding circuit 700 can suppress the temperature rise of the LED element 252 and, further, can improve the light flicker of the lighting device 200.

### 11. Embodiment 1 of a specific example of the bias current feeding circuit 700

Fig. 25 illustrates an example of specific circuit of the bias current feeding circuit 700 illustrated in Fig. 24 (hereinafter referred to as the embodiment 1). Figs. 26 to 29 show the simulation results obtained by applying the simulation program QCUS, presented by QCUS Team, to the circuitry given in Fig. 25. In this simulation, the conditions are as follows: the alternating current power source 100 is an alternating current power source of the effective value of 100 V with the frequency of 50 Hz, the capacitance of a primary current capacitor 222 is 3.2 (µF), the resistance of the resistor 220 is 1 MΩ, the capacitance of the bias capacitor is 2.0 (µF), and the resistance of a resistor 724 is 500 (kΩ). In the LED circuit 254, two LED elements 252 are connected in parallel; and the LED circuit 254 is connected in16-stage of series-connection. Therefore, the total number of the LED element is 32.

In this embodiment 1, the current 11 is substantially determined by the primary current capacitor 222. The resistor 220 is provided for protection. For example, when the power switch (not illustrated) is turned off and the lighting device 200 is separated from the alternating current power source 100, the primary current capacitor 222 becomes a charged state and the discharging of the charge in the primary current capacitor 222 occurs through a circuit via the resistor 220. If the resistor 220 is not provided, the charge in the primary current capacitor 222 stays un-discharged. This state is very dangerous. In addition, if charge is left stored in the primary current capacitor 222 and when the power switch (not illustrated) is turned on, the current at the time of the turning on the current may flow due to a composite relation with the supply voltage from the alternating current power source 100 and the residual charge in the primary current capacitor 222. The state at the time of the current-on varies due to the composite relation with the charge stored in the primary current capacitor 222 and the phase of the alternating current power source 100 at the time of the power switch (not illustrated) turning on. It is preferable to discharge the residual charge in the primary current capacitor 222 immediately after the turning off of the power switch (not illustrated). The resistor 220 serves as a discharging circuit to discharge the charge stored in the primary current capacitor 222 when the power switch (not illustrated) is turned off.

The resistor 724 connected in parallel to the bias capacitor 720 in the bias current feeding circuit 700 is for discharging the charge stored in the bias capacitor 720. When the power switch (not illustrated) is turned off, the charge stored in the bias capacitor 720 should preferably be discharged immediately. If the terminal voltage of the bias capacitor 222 is high, the discharge may take place through the LED group 250; but if the terminal voltage of the bias capacitor 720 is low, discharging through the LED group is difficult. Connecting the resistor 724 in parallel to the bias capacitor 720 enables the charge in the bias capacitor 222 to be fully discharged.

### 11.1 Explanation of working of the primary current feeding circuit 104 based on the simulation results

Fig. 26 describes the relationship between a power source voltage waveform 102 and the current 11 flowing through the parallel circuit 110 obtained based on the simulation results. The voltage V102 is a waveform of the voltage supplied from the alternating current power source 100, the effective value of the voltage is 100 V, the peak value of the positive direction voltage is about 140 (V), the peak value of the negative direction voltage is about -140 (V), and the peak-to-peak voltage is about 280 V of the sine-wave. The frequency of the power source voltage waveform 102 is 50 Hz and the period is 0.02 ms.

Since the resistance of the resistor 220 is 1 MΩ, a very large resistance, the current 11 flowing through the parallel circuit 110 in this embodiment is determined substantially by the capacitance of the primary current capacitor 222. Therefore, the current 11 is a current of which phase is 90-degree-lead with respect to the power source voltage waveform 102. The current 11 does not flow during a period P2 between the time points T1 and T2. That is, the period P2 is the current interruption period and the temperature rise of the LED element 252 is suppressed during the period. The current 11 varies depending on the change of the power source voltage waveform 102 during a period P1 between the time points T2 and T3. The period P1 serves as the primary lighting period stated above. The current 11 is full-wave rectified and out putted from the rectification circuit 230 as the primary current 2. During the current interruption period P2 of the current 11, the current value of the primary current 2 is zero; and during the primary lighting period P1, the current value of the primary current 2 varies depending on the absolute value of the power source voltage waveform 102.

Fig. 27 is a waveform chart that indicates the relationship between the primary current 2 outputted from the primary current feeding circuit 104 and the applied voltage V12. It however should be noted that the simulation waveform indicated in Fig. 27 is waveforms that have been obtained under the conditions stated below. As illustrated in Fig. 25, the bias current 4 flows in from the bias capacitor 720 of the bias current feeding circuit 700 and the terminal voltage of the bias capacitor 720 is applied on the LED group 250. Therefore, the interruption threshold with respect to the primary current 2 is determined in relation with the terminal voltage of the output terminal 234 and the terminal voltage of the bias capacitor 720, not in relation with the current flow beginning voltage of the series circuit of the LED element 252 in the LED group 250.

The primary current 2 is a full-wave rectified current of the current indicated in Fig. 26. The primary current 2 has the period P2 and the period P1, which are repeated in a cycle of every 0.01 (ms) of the half-cycle of the power source voltage waveform 102. When the applied voltage V12 on the LED group 250 lowers, the interruption of the primary current 2 begins at the time point T1 and then the primary current 2 begins to flow again through the LED group 250 at the time point T2. The reason for that the interruption of the primary current 2 occurs at the time point T1 is thought attributable to the fact that the terminal voltage across the output terminals 234 of the rectification circuit 230 became lower than the terminal voltage on the bias capacitor 720. The time point T2, at which the primary current 2 begins to flow again through the LED group 250, is the time when the terminal voltage across the output terminals 234 of the rectification circuit 230 becomes higher than the terminal voltage on the bias capacitor 720. With this situation, the primary current 2 is fed to the LED group 250 instead of the bias current 4. The primary current 2 of the primary current feeding circuit 104 is fed not only to the LED group 250 but also to the bias capacitor 720 to charge.

The voltage of the applied voltage V12 at the time of T1 of the interruption of the primary current 2 of the primary current feeding circuit 104 represents the terminal voltage of the bias capacitor 720. The voltage of the applied voltage V12 during the period of time points from T1 to T2 is dependent on the terminal voltage of the bias capacitor 720. The feeding of the bias current 4 from the bias capacitor 720 to the LED group 250 reduces the terminal voltage of the bias capacitor 720 gradually. With this, the voltage of the applied voltage V12 in the period of the time points from T1 to T2 or from T3 to T4 decreases gradually.

In this embodiment, the voltage of the applied voltage V12 is maintained always at a level larger than a value that causes the current interruption in the series circuit of the LED element 252 of the LED group 250. For example, the minimum value of the applied voltage V12 at the time point T2 or T4 is set to the level larger than a value that causes the current interruption in the series circuit of the LED element 252 of the LED group 250. Therefore, current always continues to flow through the LED group 250 and the LED element does not cease emitting light although the amount of light lowers. With this, the flickering of the lighting device 200 is suppressed. Furthermore, the voltage supplied from the bias capacitor 720 is low and the bias current 4 is controlled to a low value, the temperature rise of the LED element 252 is suppressed. 11.2 Explanation on the primary current 2, the bias current 4, and the LED light-emission current 6

The following explains the results of the simulation conducted on the circuitry described in the embodiment1. Figs. 28 and 29 are waveform charts that describe the relationship among the primary current 2, the bias current 4, and the LED light-emission current 6. These waveforms show the result of the simulation performed under the conditions mentioned above. Fig. 29 is a partially enlarged chart of the waveform given in Fig. 28. As these waveforms teach, the primary current 2 outputted from the primary current feeding circuit 104 is roughly zero during the period P2. In contrast during the period P1, the primary current 2 shows a large current value and the peak value thereof is approximately 140 (mA). This peak value of the primary current 2 is determined by the capacitance of the primary current capacitor 222. At the beginning point of the period P1, which is a current flow beginning time of the primary current 2, a charging current 12 flows to charge the bias capacitor 720. When the primary current 2 begins to lower, the bias current 4 begins to flow in accordance with the charge stored in the bias capacitor 720 and the bias current 4 is fed to the LED group 250. Then, the LED bias current 41 flows through the LED group 250 in accordance with the bias current 4.

The current flowing through the LED group 250 in accordance with the primary current 2 is defined as the LED primary current 21 and the current flowing through the LED group 250 in accordance with the bias current 4 is defined as the LED bias current 41. The LED light-emission current 6 flowing through the LED group 250 is then expressed as a composite current of the LED primary current 21 and the LED bias current 41. In the period P2, the LED primary current 21 produced in accordance with the primary current 2 is zero, then the LED lught-emission current 6 during the period P2 becomes equal to the current value of the bias current 4. In this embodiment 1, the bias current 4 and the LED bias current 41 come to have the same current value because the bias current 4 does not flow into the rectification circuit 230 due to the function of the rectification circuit 230. On the other hand, the primary current 2 causes the charging current 12 and the LED primary current 21 to flow, then the flow of the charging current 12 decreases the current value of the LED primary current 21 a little.

### 11.3 Explanation of the periods P1 and P2 where the number of stages of the LED group 250 is changed

Fig. 30 describes change of the waveform of the LED light-emission current 6 with respect to variation of the number of stages of the LED circuit 254 in the LED group 250 in the circuitry of the embodiment 1 given in Fig. 25. The graph 1 describes the waveform where the number of stages of the series-connection of the LED circuit 254 in the LED group 250 is two; the graph 2 is for the number of stages being eight; the graph 3 is for 16-stage; the graph 4 for 24-stage; and the graph 5 for 32-stage. With every increase of the number of stages of the series-connection of the LED circuit 254, the period P2 prolongs its duration and the period P1 shortens its duration. The period P2 coincides roughly with the cooling period. That is, the cooling period, in which the temperature rise of the LED element 252 is suppressed, prolongs its duration with the increase of the number of stages of the series-connection of the LED circuit 254; and the primary lighting period, in which the illuminance is ensured as a lighting device, decreases its duration. Although these graphs do not indicate, the temperature rise of the LD element 252 can be suppressed by making the number of stages of the series-connection of the LED circuit 254 eight- or nine-stage. In addition, making the number of stages of the series-connection of the LED circuit 254 be 32-stage prolongs the cooling period sufficiently. In spite of these, the primary lighting period is still ensured sufficiently.

Fig. 31 describes the relationship between the number of stages of the series-connection of the LED element 252 in the LED group 250 and the cooling period and the primary lighting period. Fig. 31 describes the change of the duration of the Period P2 with respect to the variation of number of stages of the series-connection of the LED circuit 254 in the circuitry given in Fig. 24. The graph 10 represents the ratio of the period P2 during a half cycle the graph 11 represents the duration of the period P2, that is, the current interruption duration of the LED primary current 21. As the graph 10 indicates, the period P2 is 15% when the LED circuit 254 is series-connected in 9-stage. Since the period P2 serves as the cooling period, the cooling period of 15% is enough for suppressing the temperature rise of the LED element 252.

As the graph 10 indicates, the period P2 becomes about 40% when the number of stages of the LED circuit 254 is 40-stage. When the period P2 extends, the ratio of the light-emission period of the LED circuit 254 decreases and as a consequence it becomes difficult to ensure the illuminance as a lighting device. The preferable cooling period is around 15% to 40%. Thus, the adequate number of stages of the LED circuit 254 is thought to be between 9- or 10-stage and 40- or 45-stage. The graph current 11 represents the period P2 namely the duration of the cooling period. In the case that the number of stages of the LED circuit 254 is 9- or 10-stage, the period P2 is about 1.5 ms. In the case that the number of stages of the LED circuit 254 is 40- or 45-stage, the period P2 namely the cooling period is about 4 ms.

### 11.4 Explanation of the relationship between the characteristics of the LED element 252 and the period P2

Fig. 32 is a waveform chart that describes the waveform of the LED light-emission current 6 with respect to variation of characteristics of the LED element in the electrical circuitry given in Fig. 25. The graph 12 represents the waveform in the case that the number of stages of the series-connection of the LED circuit 254 is 16-stage and the LED element 252 of the LED circuit 254 is a red LED element. The graph 13 represents the waveform in the case that the number of stages of the series-connection of the LED circuit 254 is 16-stage and the LED element 252 of the LED circuit 254 is a green LED element.

Compared to the graph 12 of the case that the red LED element is used, the duration of the period P2 on the graph 13 of the case that the green LED element is used is long. This is thought to be attributable to the fact that the current flow beginning voltage of the green LED is high compared to that of the red LED.

### 11.5 Explanation of the relationship between the capacitance of the bias capacitor 720 and the bias current 4

Figs. 28 and 29 describe the waveform of the primary current 2 and the bias current 4 with respect to the circuitry given in Fig. 25. Described in Fig. 29 is a partially enlarged waveform given in Fig. 28. The primary current 2 does not flow during the period P2. Therefore, the LED light-emission current 6 flowing through the LED group 250 is determined by the bias current 4. The bias current 4 flows in accordance with the charge in the bias capacitor 720 provided in the bias current feeding circuit. Therefore, the current value of the bias current 4 decreases with the lapse of time after the bias current 4 begins to flow. As can be known from Fig. 29, the current value of the bias current 4 at the ending time points T3 and T4 of the period P2 decreases to a value smaller than the value at the beginning time point T1 and T2 of the period P2. For the stable light emission of the LED element 252 in the LED group 250, it is preferable that the bias current 4 should not vary much during the period P2. Fig. 33 shows the relationship between the current value of the bias current 4 at the beginning time points T1 and T2 of the period P2 and the current value of the bias current 4 at the ending time point T3 nad T4 of the period P2 when the capacitance of the bias capacitor 720 is varied.

The graph 16 describes the variation of the bias current 4 at the beginning time point T1 and T2 of the period P2 and the graph 17 describes the variation of the bias current 4 at the ending time point T3 and T4 of the period P2. A consideration should be given to the minimum value of the bias current 4; a capacitance of 1 µF to 10 µF is preferable. The difference between the graph 16 and the graph 17 is very big. Although the behavior shows a big difference like that, the above-stated configuration still can contributes to the prevention of the flickering on a lighting device and further offers a large effect for the prevention of the heat generation.

### 12. Explanation of other embodiments

### 12.1 Explanation of the embodiment 2 as another embodiment of the embodiment given in Fig. 1

As described in Fig. 33, the difference between the current value of the bias current 4 at the beginning time points T1 and T2 of the period P2 and the current value of the bias current 4 at the ending time points T1 and T2 of the period P2 is very big in the embodiment 1 shown in Fig. 25. An improved configuration in terms of that problem is explained below as the embodiment 2. In the embodiment 1 shown in Fig. 24, the charging current 12 to the bias capacitor 720 and the bias current 4 as the discharging current flow through the same circuit. It is therefore difficult to regulate independently each of the discharging current 12 and the bias current 4. Thus, as described in Fig. 33, the difference between the current value of the bias current 4 at the beginning time points T1 and T2 of the period P2 and the current value of the bias current 4 at the ending time points T1 and T2 of the period P2 becomes very big.

Fig. 34 illustrates another embodiment of the embodiment 1 given in Fig. 25 (hereinafter referred to as the embodiment 2). In this embodiment 2, the bias current feeding circuit 700 further has a charging diode 726 and a bypass current regulating resistor 728. The charging current 12 of the bias capacitor 720 flows through the charging diode 726 and the bias current 4 fed from the bias capacitor 720 to the LED group 250 flows through the bypass current regulating resistor 728.

The important point in this is that the charging current 12 flows through the charging capacitor 726 and that the bias current 4 flows through the bypass current regulating resistor 728 by the function of the charging diode 726. Incidentally, a diode 702 may be omitted causing no problems. It should be noted that the bypass current regulating resistor 728 is a resistor that determines the time-constant of the discharge current of the bias capacitor 720; therefore, a current-decrease problem may be incurred in the bias current 4 if the resistance thereof is too large. According to the simulation, a resistance between 700 (Ω) and 2 (kΩ) is adequate for the resistance of the bypass current regulating resistor 728.

### 12.2 Explanation of the embodiment 3 as another embodiment

Fig. 35 illustrates further another embodiment (hereinafter referred to as the embodiment 3). In this embodiment likewise as in the other embodiment, the primary current feeding circuit 104 has the parallel circuit 110 having the primary current capacitor 222 and the resistor 220, and the rectification circuit 230 having the input terminal 232 and the output terminal 234. An alternating current is fed to the input terminal 232 of the rectification circuit 230 through the primary current capacitor 222. The alternating current so fed is rectified into the primary current 2 of pulsating current, which is then fed from the output terminal 234 of the rectification circuit 230 to the LED group 250.

The difference from the embodiment 1 or the embodiment 2 is that the charging current 12 of the bias capacitor 720 in the bias current feeding circuit 700 is fed not from the output side of the primary current feeding circuit 104 but from the power source side of the primary current feeding circuit 104. The alternating current voltage is fed from a point between the plug fixture 105 and the primary current feeding circuit 104 to the charging diode 726 of the bias current feeding circuit 700. Thereby, the charging current 12 is fed to the bias capacitor 720 through the charging diode 726 and a charging current regulating resistor 748. The charge stored in the bias capacitor 720 through a charging current regulating resistor 748 is discharged through the bypass current regulating resistor 728 and the bias diode 702.

In this embodiment for example, setting the capacitance of the bias capacitor 720 to 2.0 (µF), a resistance of the resistor 742 to 2000 (kΩ), the resistance of the resistor 728 to 5 (kΩ), and the resistance of the resistor 748 to 1 (kΩ) can gain a preferable operation. This circuitry does not use the output of the primary current feeding circuit 104; the charging current 12 for supplying the bias current 4 is taken out from the power source. This ensures obtaining the charge for supplying the bias current 4 without effects from the behavior of the primary current feeding circuit 104. Thus, this has a feature that the flickering of the lighting device 200 can be easily controlled.

It should be noted in this embodiment that, the current interruption period of the primary current 2 exists every half cycle of the alternating current fed from the alternating current power source 100; in contrast to this, the charging current 12 to be fed to the bias capacitor 720 through the charging diode 726 and the charging current regulating resistor 748 flows every one cycle. This means that one charging must flow the bias current 4 twice. Therefore, the current value of the bias current 4 during the second half cycle is tends to become smaller than that during the first half cycle after the charging.

The current value of the charging current 12 is regulatable by the charging current regulating resistor 748 and the discharging current of the bias capacitor 720, the bias current 4, is adjustable by the bypass current regulating resistor 728. Since one charging with the charging current 12 must flow the bias current twice, the resistance of the charging current regulating resistor 748 is made much smaller than the resistance of the bypass current regulating resistor 728 so that the charging current 12 increases to its possible extent reducing the bias current 4. The resistance of the bypass current regulating resistor 728 is considerably larger than that of the charging current regulating resistor 748, which makes the discharging time constant of the bias current 4 large; and thereby the difference between the first and the second discharging currents is made small as much as possible.

The charging diode 726 is a diode to supply the charging current 12. If the charging current 12 does not flow, the charge stored in the bias capacitor 720 discharges through the charging current regulating resistor 748. The charging diode 726 prevents the discharging current from flowing through the charging current regulating resistor 748. The bias diode 702 functions to supply the bias current 4. If the bias diode 702 is omitted, the charging current for the bias capacitor 720 is prevented from flowing from the bypass current regulating resistor 728.

It should be noted that this embodiment works even though the bias diode 702 is not provided. In such case, the bypass current regulating resistor 728 and the bias capacitor 720 work in the same manner as explained in the embodiment 1 given in Fig. 25. Therefore, if the bias diode 702 is not provided, the working is the same as the working explained in Fig. 25 with further additions of a charging circuit having the charging diode 726 and the charging current regulating resistor 748. In this case, the configuration becomes to be a state such that the charging circuit having the charging diode 726 and the charging current regulating resistor 748 are newly added to the embodiment 1. Therefore, it becomes practicable to make the current value of the bias current 4 larger than that of the embodiment 1.

### 12.3 Explanation of the embodiment 4 as another embodiment

In the embodiment given in Fig. 35, the bias capacitor 720 for feeding the bias current 4 is charged every one cycle; in contrast to this, the bias current 4, the discharging current of the bias capacitor 720, flows every half cycle. Therefore, the unevenness occurs easily between the magnitude of the bias current 4 immediately after the charging the bias capacitor 720 and the magnitude of the bias current 4 flowing each half cycle. An improved configuration in terms of that problem is explained below as the embodiment 4.

Fig. 36 illustrates the electrical circuitry of further another embodiment (hereinafter referred to as the embodiment 4). The configuration and working thereof in the embodiment 4 are as follows: The bias current feeding circuit 700 has a first charging diode 778 and a second charging diodes 776. When the alternating current voltage fed from the alternating current power source 100 is on the one state, that is, a terminal 1 is positive and a terminal 2 is negative, the charging current 14 is fed to the bias capacitor 720 through the first charging diodes 778 and a resistance 758; and, through the bias capacitor 720, the charging current 14 flows to the terminal 2 of the alternating current power source 100 through a resistor 784 and a diode 782. By this charging current 14, the bias capacitor 720 is charged. During at least the interruption period of the primary current 2 fed from the rectification circuit 230, that is, during at least the period P2, the charge stored in the bias capacitor 720 discharges through the bypass current regulating resistor 728 and the bias diode 702.

In contrast to that when the terminal 2 is positive and the terminal 1 is negative, the charging current 16 is fed to the bias capacitor 720 through the charging diode 776 and a resistor 756; and, through the bias capacitor 720, the charging current 16 flows to the terminal 1 through a resistor 788 and a diode 876. Thus in the embodiment 4, the bias capacitor 720 is charged every half cycle, which means that the bias current 4 is fed on every one charging. Then, the bias current 4 can be fed in more large current.

In this embodiment, setting the capacitance of the bias capacitor 720 to 2.0 (µF), the resistance of the resistor 742 to 500 (kΩ), the resistance of the resistor 728 to 1.5 (kΩ), the resistance of the resistor 784 to 30 (Ω), the resistance of the resistor 788 to 50 (Ω), the resistance of the resistor 756 to 30 (Ω), and the resistance of the resistor 758 to 450 (Ω) brings a good operation.

In this embodiment 4, the bias current 4 can be fed with a current value larger than that in the other embodiment during the period P2, a current interruption period of the primary current 2; and thereby, the LED light-emission current 6 during the period P2 is sufficiently ensured. Consequently, the amount of light emission of the LED element 252 during the period P2, the interruption period, can be sufficiently ensured. Thereby, more reduction of the flickering becomes achievable. In addition during the period P2, the amount of the heat generation of the LED element 252 can be reduced because the LED primary current 21 flowing through the LED group 250 produced from the primary current 2 is interrupted. Although, compared to the other embodiment, the heat generation may increase a little due to the portion attributable to the increment of the current in the bias current 4, the LED element still does not become high-temperature.

### 13. Explanation of the embodiment 5 as another embodiment of the primary current feeding circuit 104

In the embodiments explained above, specific examples with respect to the bias current feeding circuit 700 were mentioned. Embodiments of the primary current feeding circuit 104 are not limited to those mentioned above. It is an important point that the LED primary current 21, among the currents flowing through the LED group 250, produced from the output of the primary current feeding circuit 104 undergoes the current interruption period. Fig. 37 illustrates another embodiment of the primary current feeding circuit 104 for giving the current interruption period to the LED primary current 21 (hereinafter referred to as the embodiment 5).

The major difference from the other embodiments (embodiments 1 to 4) is that the peak value of the LED light-emission current 6 flowing through the LED group 250 is determined not by using the primary current capacitor 222 but by using a resistor 320. It should be noted that the function of the resistor 220 in the embodiments 1 to 4 is different from the function of the rectification circuit 230; the resistor 220 is not for determining the peak value of the LED light-emission current 6 but for discharging the charge stored in the primary current capacitor 222. When the power switch is turned off for example, the residual charge in the primary current capacitor 222 should be discharged immediately for increased safety. For this purpose, the resistor 220 is provided to discharge the charge in the primary current capacitor 222. As stated above, a resistor 320 is the resistor for regulating the peak value of the LED light-emission current 6. A specific value is preferably between 200 Ω and 700 Ω.

Fig. 38 shows the LED light-emission current 6 and the charging-discharging current of the bias capacitor 720 in the circuitry given in Fig. 37, wherein the resistance of the resistor 320 is 400 Ω and the number of stages of the LED group is 16-stage. The graph 21 is the waveform of the voltage supplied from the alternating current power source 100, the graph 22 is the waveform of the LED light-emission current 6 flowing through the LED group 250, and the graph 23 is the waveform of the charging-discharging current of the bias capacitor 720. The peak value that the graph 22 denotes is determined by the resistance of the resistor 320 and the resistance of the fuse 224. The primary current fed from the primary current feeding circuit 104 has the period P2 that is the current interruption period. The bias current 4, which is the discharging current of the bias capacitor 720, sipplies the LED bias current 41 through the LED group 250 at least during the period P2; and the LED light-emission current 6 continues to flow even during the period P2. As a consequence to this, the flickering is suppressed. Further, the temperature rise of the LED element provided in the LED group 250 is suppressed because the primary current 2 has the period P2 that is the current interruption period.

Fig. 39 shows the waveform of the primary current 2, which is the output current of the primary current feeding circuit 104 in the embodiment given in Fig. 37, wherein the number of stage of the LED group 250 is changed to 32-stage and the resistance of the resistor 320 is 300 Ω. The graph 21 is the waveform of the power source voltage supplied from the alternating current power source 100 and the graph 26 is the waveform of the primary current 2, which is the output of the primary current feeding circuit 104.

The decrease in the resistance of the resistor 320, causes the peak value of on the graph 26 in Fig. 39 to be larger than the peak value on the graph 22 in Fig. 38. Further, the increase in the number of stages of the LED group 250 causes the current interruption period of the primary current 2 to be very long. In the circuitry given in Fig. 37, the increase in the number of stages of the LED group 250 causes the current interruption period of the primary current 2 to elongate as with the other embodiment; that is, the behavior becomes the one as explained in Fig. 30. When the total of the resistances of the resistor 320 and the fuse 224 is increased, the peak value on the graph 26 decreases. In the embodiments 1 to 4 as stated previously, the increase of the capacitance of the primary current capacitor 222 increases the peak value of the LED primary current 21, and the decrease of the capacitance of the primary current capacitor 222 causes the same behavior in that the peak value of the LED primary current 21 decreases.

### 14. Explanation of the embodiment 6 on the configuration of the lighting device 200

Fig. 40 is a cross sectional view of the tube part of another example of the straight tube lighting device in an embodiment of the lighting device having the LED element of the present invention. In the embodiments illustrated in Figs. 1 to 11, the cylindrical case 512 has a shape of a cylinder having an approximately uniform wall thickness. When concentration of the lighting light is desired, use of the cylindrical case 512 illustrated in Fig. 40 is very convenient.

The cylindrical case 512 has a cross sectional configuration as described below in the plane perpendicular to the longitudinal axis thereof. The cross sectional configuration has a thick-wall part 602 that works as a convex lens and a thin-wall part 604 that has an approximately uniform wall thickness thinner than the thick-wall part 602; wherein both sides of the thick-wall part 602 have curved parts each connecting to a thin-wall part 604, and the shape of the curved part, which connects to the thin-wall part 604, is continuously formed longitudinally along the cylindrical case 512.

With this configuration, when the LED element on the resin board 570 emits light, the emitted light enters the thin-wall part 604, and the entered light is refracted and converges on the area of a light ray 610 to radiate the light. Therefore, the radiated light does not form a broad beam spread and travels to the area of the light ray 610 in a form of a converged light having a directional beam. Thus, when the straight tube lighting device is installed in the ceiling, the lighting device can radiate downward bright light without unevenness of illuminance or without appearing a line that the difference of brightness may cause. When lighting such as a staircase, it is dangerous if unevenness of illuminance occurs or a line caused by the difference of brightness appears. The danger of this kind can be decreased.

### 15. Explanation of the embodiment 7 on the configuration of the lighting device 200

Fig. 41 is a partial cross sectional view of the side view of a downlight as an embodiment regarding the structure of the lighting device having the circuitry in the above stated embodiment. Fig. 42 is a bottom view of the downlight given in Fig. 41. Shown in Fig. 43 is an explanatory illustration of a parts arrangement on the circuit board for used in the above-stated downlight. This embodiment employs the electrical circuitry used in the embodiments 1 to 5 sated above. A housing 400 is comprised of a fixing bracket 420, an inner case 422, an outer case 424, and an inner cover 426 of glass or transparent resin, which works as a light transmitting part. Inside the housing 400, a base plate 20 of flat shape for holding the LED group 250 is fixed with a screw 432. The housing 400 is fastened to the fixture mount 480 such as ceiling by pinching a fixture mount 480 such as ceiling with the fixing bracket 420 and the outer case 424 and then fixing the outer case 424 with a screw on a bracket 442 secured to the fixing bracket 420.

As stated above, since the LED group 250 is maintained in a very low temperature, a metal plate for heat dissipation is not provided. The base plate 20 has, on its one face, the LED group 250, the capacitor 222, the resistor 220, the rectification circuit 230, the fuse 224, the capacitor 720, and the resistor 724; and the other face faces to the inside of the inner case 422 across a narrow space.

The feature of the lighting device 200 is as follows. Since the heat generation of the LED group is reduced and the temperature rise is suppressed thereby, the heat radiation plate of metal can be omitted. This further suppresses the thickness-wise dimension of the lighting device 200 because the space between the base plate 20 and the inner case 422 can be reduced and also the space between the base plate 20 and the inner cover 426 can be reduced as well.

Furthermore, since the temperature of the housing 400 is suppressed low, there is no fear of fire even if dust adheres on the housing 400. In addition, there is no risk of burn even if touched the housing 400 accidentally while the device is active.

In the center of the base plate 20 of a flat-shaped plate illustrated in Fig. 22, the resistor 220, the capacitor 222, the rectification circuit 230, the fuse 224, the capacitor 720, and the resistor 724 are installed. On the outer periphery thereof, the LED circuits 254 are concentrically arranged in a circular array. The resistor 220, the capacitor 222, and the rectification circuit 230 configure the current feeding circuit 104; and the capacitor 720 and the resistor 724 configure the bias current feeding circuit 700. Further, the outside of this arrangement, screw holes 22 are provided at three locations for fixing with screws 432. It should be noted that the reference numeral accompanies only a part of the series-connected LED circuits 254 for simplicity, because, if all the LED circuits 254 are accompanied by reference numerals, the description will become intricate. The lines connecting between the LED circuits 254 denote the wiring to connect them in series. These are used as the electrical parts 30.

In the center of the base plate 20 in this way, the resistor 220, the capacitor 222, the rectification circuit 230, and the fuse 224 are arranged; and the LED circuits 254 are arranged concentrically at an equiangular spacing on the outer periphery thereof. Therefore, the space occupation is small enabling downsizing. In addition, since the LED circuits 254 are arranged concentrically at an equiangular spacing on the outer periphery thereof, even if the center area is dark, a discomfort due to the unevenness of brightness can be reduced.

### {Reference numerals}

- 100: Alternating current power source
- 220: Resistor
- 222: Peak current setting capacitor
- 230: Rectification circuit
- 224: Fuse
- 250: LED group
- 252: LED element
- 254: LED circuit
- 322: Ridge
- 323: Ridge
- 326: Groove
- 328: First space
- 329: Second space
- 324: Ridge
- 330: Step
- 334: Groove
- 510: Straight tube LED lamp
- 512: Cylindrical case
- 502: Fixture
- 504: Fixture
- 520: Lamp mount
- 522: Lamp mount
- 530: Supporting column
- 532: Supporting column
- 540: Fixing base
- 542: Fixing base
- 550: Driving circuit
- 570: Resin board
- 580: Electrical circuit
- 590: Power cord
- 600: Fixing plate and bias current feeding circuit
- 00: Bias current feeding circuit
- 702: Bias diode
- 720: Bias capacitor
- 724: Resistor
- 726: Charging diode
- 778: Charging diode
- 776: Charging diode

## Claims

1. A lighting device having LED element, comprising
an LED group having series-connected plural number of LED elements that emit light with feeding a light-emission current and
a driving circuit for feeding the light-emission current that flows through the series-connected plural LED elements of the LED group, wherein
the driving circuit includes an alternating current power source terminals for receiving supply of alternating current, a peak current control circuit element that controls the peak current of the light-emission current, and a full-wave rectification circuit that full-wave rectifies alternating current inputted into an input terminal thereof and outputs pulsating current from an output terminal thereof, wherein
the peak current control circuit element and input terminals of the full-wave rectification circuit are provided between the alternating current power source terminals,
the LED group is connected between the output terminals of the full-wave rectification circuit, and
the peak value of the light-emission current flowing through the LED group is determined in accordance with the peak current control circuit element, wherein
the light-emission current fed to the LED group has feeding periods of a low current period that is determined in accordance with the number of the series-connections of LED elements of the LED group and a lighting light-emission period the peak value in which is determined in accordance with the peak current control circuit element, wherein
the light-emission current is a pulsating current that flows repeating feeding periods of the low current period and the lighting light-emission period.

2. The lighting device having LED element according to claim 1, wherein the peak current control circuit element is a peak current control capacitor and the capacitance of a peak current setting capacitor is in a range from 0.5 µF or more to 20 µF or less.

3. The lighting device having LED element according to claim 2, wherein the peak current control capacitor has a resistor connected in parallel thereto and the resistance of the resistor is 3 kΩ or larger.

4. The lighting device having LED element according to claim 1, wherein the peak current control circuit element is a peak current control resistor and the resistance of the peak current control resistor is in a range from 200 Ω to 700 Ω.

5. The lighting device having LED element according to claim 1, further comprising
a straight tube LED lamp having a resin board therein and
a first fixture and a second fixture respectively installed on both ends of the straight tube LED lamp for supporting the lamp, wherein
the LED group and the driving circuit are mounted on the resin board, and each of the first and the second fixtures has a lamp mount that secures the end of the straight tube LED lamp, a fixing base for attaching the straight tube LED lamp thereon, and a supporting column that joins the lamp mount integrally to the fixing base.

6. The lighting device having LED element according to claim 1, further comprising a case that accommodates therein a resin board, wherein the driving circuit is provided on the resin board and the LED elements of the LED group are arranged outer periphery of the driving circuit.

7. The lighting device having LED element according to claim 1, wherein the low current period is a current interruption period where the current flowing through the LED group fed from the driving circuit is zero.

8. The lighting device having LED element according to claim 7, further comprising a bias current feeding circuit, wherein the bias current feeding circuit feeds at least during the current interruption period.
